# EUROPEAN PATENT APPLICATION

(11) **EP 4 721 581 A1**
(43) Date of publication of application: **08.04.2026**
(21) Application number: 23939791.2
(22) Date of filing: 11.12.2023
(51) Int. Cl.: A23L 11/45

(54) **METHOD FOR PRODUCING TOFU, METHOD FOR PRODUCING SOYMILK, AND PACKAGED TOFU**

(30) Priority: 02.06.2023 JP 2023091709
(71) Applicant: House Foods Group Inc., Higashiosaka-shi, Osaka 577-8520 (JP)
(72) Inventor: NISHIMURA, Shimpei, Higashiosaka-shi, Osaka 577-8520 (JP); NG, Wai Yee, Higashiosaka-shi, Osaka 577-8520 (JP); NISHIMURA, Ryo, Higashiosaka-shi, Osaka 577-8520 (JP); ISHIZUKA, Keiko, Higashiosaka-shi, Osaka 577-8520 (JP); WADA, Takuya, Higashiosaka-shi, Osaka 577-8520 (JP); ONISHI, Kotaro, Higashiosaka-shi, Osaka 577-8520 (JP); TAKETANI, Keiko, Higashiosaka-shi, Osaka 577-8520 (JP); AOYAGI, Morihiro, Higashiosaka-shi, Osaka 577-8520 (JP)
(74) Representative: Dentons Patent Solutions Rechtsanwaltsgesellschaft mbH
(86) International application number: PCT/JP2023/044264
(87) International publication number: WO 2024/247324

(57) **Abstract**

The present invention provides a method for producing, without a step of soaking soybeans in water, tofu firmer than tofu produced with known soybean-soak-free production methods. A method described herein is a method for producing tofu, comprising grinding a first mixture of soybeans and water until particles of the soybeans in the first mixture have a median diameter less than or equal to 250 µm, heating the ground first mixture, separating the ground and heated first mixture into soymilk and solid soy pulp, and preparing tofu by coagulating a second mixture of the soymilk and a coagulant.

## Description

### FIELD

The present invention relates to a method for producing tofu, a method for producing soymilk, and packaged tofu.

### BACKGROUND

A known method for producing tofu includes processes below. Whole soybeans are washed and soaked in water. After water soaks into the whole soybeans through soaking, the whole soybeans are ground with water. This produces slurry. The slurry is then heated, and heated slurry is obtained. The heated slurry is separated into soymilk and solid soy pulp. A coagulant is then added to the soymilk for coagulation. This produces tofu. Tofu obtained through coagulation refers to soft tofu (silken tofu). Tofu obtained by filling soymilk and a coagulant in a container before coagulation in the container refers to filled tofu. Tofu obtained by breaking soft tofu or filled tofu into broken tofu and then compressing the broken tofu in a mold refers to firm tofu (cotton tofu).

The above method for producing tofu involves a process of soaking whole soybeans that typically takes ten hours or longer. This causes a longer production lead time and low hourly productivity. Additionally, a large amount of water is used to soak whole soybeans, and a large amount of wastewater is left after soaking. Further, the soaked soybeans cannot be stored. When the subsequent process is stopped due to malfunctions or any other trouble, the soybeans are discarded. Any one of these issues places heavy loads on the environment. To address these issues, a method for producing tofu called a soybean-soak-free production method has been developed as a method for producing tofu without soaking soybeans.

Patent Literature 1 describes a method for producing soak-free soymilk. With the method, soybeans are weighed, crushed, dehulled, stirred with water, ground, and heated in a boiling pot to obtain heated slurry, and the heated slurry is separated into soymilk and solid soy pulp to produce soak-free soymilk.

Patent Literature 2 describes a method for reducing both the soak time and the processing load of wastewater in the soybean-soak production method, in which ingredient soybeans are cracked and dehulled, the cracked and dehulled soybeans are supplied to a sequential soaking apparatus, soaked, and ground without discarding the water in the bucket of the sequential soaking apparatus to produce raw slurry (unheated slurry).

Patent Literature 3 describes a method for producing a whole soybean food product that provides the same texture as common tofu when eaten without a process of soaking soybeans in water. With the method, soybeans sorted and washed with water based on a method for producing common tofu are not immediately soaked in water. The soybeans are crushed until 90% or more of the soybeans have a particle size of 30 to 10 µm in a dry state. The soybeans are then heated with added water in the same manner as ground soybeans being treated with a method for producing common tofu. A coagulant is added, and the soybeans are mixed thoroughly and coagulated.

Patent Literature 4 describes a method for producing easy-to-drink soymilk with a favorable flavor that has no grassy bean smell or irritativeness to the throat. With the method, soaked soybeans or soak-free soybeans are ground at grinding temperatures of 65 to 78 °C, and the obtained slurry is heated to a temperature higher than or equal to 80 °C and separated into solid components and liquid components. According to Patent Literature 4, soymilk has grassy bean smell and irritativeness to the throat because of the components generated by oxidases and glycosidases. With the above method, grinding at temperatures of 65 to 78 °C reduces the functions of the enzymes, and heating the slurry at a temperature higher than or equal to 80 °C thermally inactivates the enzymes. This reduces grassy bean smell and irritativeness to the throat.

Patent Literature 5 describes a method for reducing the production of unpleasant taste components in soymilk for tofu. With the method, soybeans are ground at a temperature lower than or equal to 15 °C while water is being added without the soybeans being soaked in the water, and the obtained slurry (raw slurry) is heated and separated into solid components and liquid components to produce soymilk for tofu. In Patent Literature 5, whole soybeans or dehulled soybeans are used as the soybeans.

Patent Literature 6 describes a method for producing soymilk for tofu using soak-free soybeans. The method includes a step in which soybeans are not soaked but are ground with water under a temperature condition of 20 to 70 °C inclusive without causing the soybean proteins to denature with heat, a step in which the ground soybeans are not boiled but are directly separated into solid soy pulp and soymilk with a centrifuge, a step in which the soymilk is degassed and directly heated with steam under a temperature condition of 100 to 150 °C inclusive and the soybean proteins are denatured, and a step of further degassing and cooling. In Patent Literature 6, the soybeans are whole soybeans, dehulled soybeans, or hypocotyl-removed soybeans.

### CITATION LIST

### PATENT LITERATURE

Patent Literature 1: Japanese Unexamined Patent Application Publication No. 2020-141594
Patent Literature 2: Japanese Unexamined Patent Application Publication No. 2012-187058
Patent Literature 3: Japanese Unexamined Patent Application Publication No. 2007-105019
Patent Literature 4: Japanese Unexamined Patent Application Publication No. 2005-46118
Patent Literature 5: Japanese Unexamined Patent Application Publication No. H04-299952
Patent Literature 6: Japanese Unexamined Patent Application Publication No. S61-216652

### BRIEF SUMMARY

### TECHNICAL PROBLEM

Tofu is rich in protein and has been recently consumed in Western countries, such as the United States, as a substitute for meat. Tofu preferred in Western countries has a firmer texture than tofu commonly consumed in Japan.

Silken tofu (soft tofu) commonly consumed in Japan has firmness that causes, when a 3-cm-cubic specimen adjusted to 5 °C is compressed by a circular plunger with a diameter of 20 mm at a uniform speed of 60 mm/min, a force applied on the circular plunger at the time of disruption to be 180 to 250 gf. Cotton tofu (firm tofu) has firmness that causes the force to be 250 to 350 gf. The method for measuring firmness is described later. Silken tofu and cotton tofu produced with a known soybean-soak-free production method have a still lower value of firmness.

One or more aspects of the present invention are thus directed to a method for producing, without a step of soaking soybeans in water, tofu firmer than tofu produced with known soybean-soak-free production methods, a method for producing soymilk that can be used in producing the tofu, and packaged tofu with increased firmness.

Another aspect of the present invention is directed to a method for identifying tofu or soymilk produced with a soybean-soak-free production method.

### SOLUTION TO PROBLEM

Embodiments of the present invention are herein described below.
(1) A method for producing tofu, the method comprising:
   grinding a first mixture of soybeans and water until particles of the soybeans in the first mixture have a volume median diameter less than or equal to 250 µm in a particle size distribution measured by dynamic light scattering;
   heating the ground first mixture;
   separating the ground and heated first mixture into soymilk and solid soy pulp; and
   preparing tofu by coagulating a second mixture of the soymilk and a coagulant.
(2) The method according to (1), wherein
   the coagulant contains calcium sulfate.
(3) The method according to (1) or (2), wherein
   the tofu has firmness to cause, when a 3-cm-cubic specimen of the tofu adjusted to 5 °C is compressed by a circular plunger with a diameter of 20 mm at a uniform speed of 60 mm/min, a force applied on the circular plunger at a time of disruption to be greater than or equal to 290 gf.
(4) The method according to any one of (1) to (3), further comprising:
   cracking soybeans,
   wherein the first mixture is a mixture of the cracked soybeans and water.
(5) The method according to (4), wherein
   the cracking soybeans includes cracking and dehulling the soybeans simultaneously.
(6) The method according to any one of (1) to (5), wherein
   the preparing the tofu includes
   filling and sealing the second mixture in a first container, and
   preparing the tofu by coagulating the second mixture in the first container.
(7) The method according to (6), wherein
   the preparing the tofu further includes performing sterilization.
(8) The method according to any one of (1) to (5), further comprising:
   after the preparing the tofu, filling and sealing the tofu in a second container.
(9) The method according to (8), wherein
   the filling and sealing the tofu in the second container further includes performing sterilization.
(10) The method according to any one of (1) to (5), further comprising:
   after the preparing the tofu, breaking the tofu into broken tofu; and
   preparing firm tofu by compressing the broken tofu in a mold.
(11) The method according to (10), further comprising:
   after the preparing firm tofu, filling and sealing the firm tofu in a third container; and
   performing sterilization.
(12) The method according to (10) or (11), wherein
   the firm tofu has firmness to cause, when a 3-cm-cubic specimen of the firm tofu adjusted to 5 °C is compressed by a circular plunger with a diameter of 20 mm at a uniform speed of 60 mm/min, a force applied on the circular plunger at a time of disruption to be greater than or equal to 400 gf.
(13) A method for producing soymilk, comprising:
   grinding a first mixture of soybeans and water until particles of the soybeans in the first mixture have a volume median diameter less than or equal to 250 µm in a particle size distribution measured by dynamic light scattering;
   heating the ground first mixture; and
   separating the ground and heated first mixture into soymilk and solid soy pulp.
(14) The method according to (13), further comprising:
   cracking soybeans,
   wherein the first mixture is a mixture of the cracked soybeans and water.
(15) The method according to (14), wherein
   the cracking soybeans includes cracking and dehulling the soybeans simultaneously.
(16) The method according to any one of (13) to (15), wherein
   the soymilk has a protein concentration greater than or equal to 4.0% by mass.
(17) Packaged tofu, comprising:
   a container; and
   tofu prepared by filling and sealing a mixture containing soymilk and a coagulant in the container and coagulating the mixture in the container, the tofu having firmness to cause, when a 3-cm-cubic specimen of the tofu adjusted to 5 °C is compressed by a circular plunger with a diameter of 20 mm at a uniform speed of 60 mm/min, a force applied on the circular plunger at a time of disruption to be greater than or equal to 290 gf, the tofu having a protein concentration less than or equal to 7.0% by mass.
(18) The packaged tofu according to (17), wherein
   the tofu contains calcium sulfate.
(19) Packaged tofu, comprising:
   a container; and
   tofu filled and sealed in the container, the tofu having firmness to cause, when a 3-cm-cubic specimen of the tofu adjusted to 5 °C is compressed by a circular plunger with a diameter of 20 mm at a uniform speed of 60 mm/min, a force applied on the circular plunger at a time of disruption to be greater than or equal to 400 gf, the tofu having a protein concentration less than or equal to 15.0% by mass.
(20) The packaged tofu according to (19), wherein
   the tofu contains calcium sulfate.
(21) Packaged tofu, comprising:
   a container; and
   tofu filled and sealed in the container,
   wherein, in the tofu, a concentration of α-glycerophosphocholine by mass is greater than or equal to 0.40 times a concentration of fructose-6-phosphate by mass, and a concentration of aspartic acid by mass is greater than or equal to 1.60 times a concentration of tyrosine by mass, and
   the tofu has firmness to cause, when a 3-cm-cubic specimen of the tofu adjusted to 5 °C is compressed by a circular plunger with a diameter of 20 mm at a uniform speed of 60 mm/min, a force applied on the circular plunger at a time of disruption to be greater than or equal to 290 gf.
(22) The packaged tofu according to (21), wherein
   the tofu has firmness to cause the force to be greater than or equal to 400 gf.
(23) A method for identifying tofu or soymilk produced with a soybean-soak-free production method including no step of soaking soybeans in water for 60 minutes or longer to cause the soybeans to absorb the water, the method for identifying comprising:
   measuring concentrations by mass of α-glycerophosphocholine, fructose-6-phosphate, aspartic acid, and tyrosine in tofu or soymilk as a test target; and
   determining that the tofu or soymilk as the test target is tofu or soymilk produced with the soybean-soak-free production method when a concentration of α-glycerophosphocholine is greater than or equal to 0.40 times a concentration of fructose-6-phosphate and a concentration of aspartic acid is greater than or equal to 1.60 times a concentration of tyrosine.
(24) The method according to (23), wherein
   the soybean-soak-free production method is the method for producing tofu according to any one of (1) to (12) or the method for producing soymilk according to any one of (13) to (16).

The present application claims priority to Japanese Patent Application No. 2023-091709, the contents of which are incorporated herein.

All publications, patents, and patent applications cited herein are incorporated by reference in their entirety.

### ADVANTAGEOUS EFFECTS

The method for producing tofu described herein does not involve a step of soaking soybeans in water and allows production of tofu with increased firmness that is preferred in Western countries.

The method for producing soymilk described herein allows production of soymilk that can be used in producing the tofu described above.

The packaged tofu according to one or more embodiments described herein has increased firmness preferred in Western countries.

The packaged tofu according to one or more other embodiments described herein also has increased firmness preferred in Western countries.

With the method for identifying tofu or soymilk produced with a soybean-soak-free production method described herein, tofu or soymilk as a test target can be easily identified as the tofu or soymilk produced with the soybean-soak-free production method.

### BRIEF DESCRIPTION OF DRAWINGS

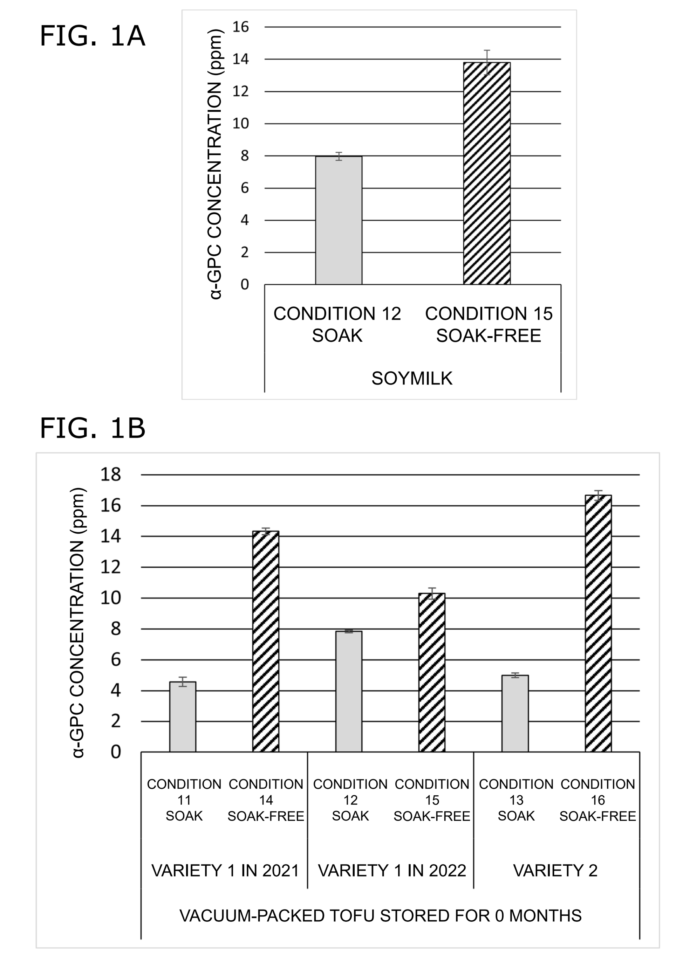

FIG. 1A is a graph showing the concentrations of α-glycerophosphocholine (α-GPC) in soymilk produced with a soaking method (Condition 12) from ingredient soybeans of variety 1 harvested in 2022 and of soymilk produced with a soak-free method (Condition 15) from the same soybeans.
FIG. 1B is a graph showing the concentrations of α-GPC in vacuum-packed tofu produced with a soaking method (Conditions 11, 12, and 13) or the soak-free method (Conditions 14, 15, and 16) from ingredient soybeans of the variety 1 harvested in 2021 (Conditions 11 and 14), the variety 1 harvested in 2022 (Condition 12 and 15), or the variety 2 (Conditions 13 and 16) measured immediately after production (stored for zero months).

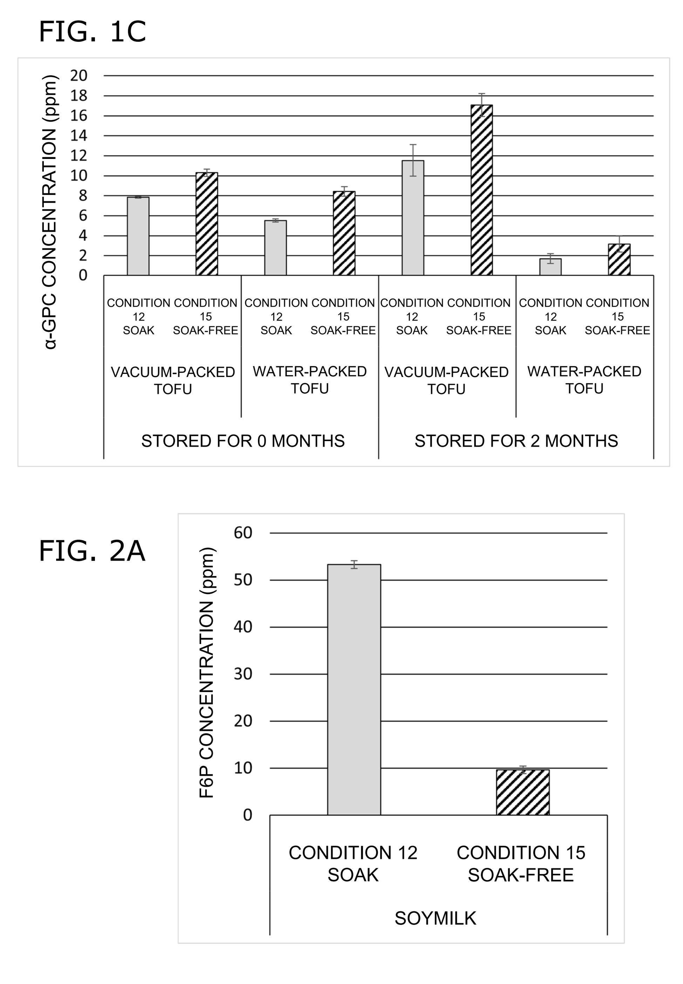

FIG. 1C is a graph showing the concentrations of α-GPC in vacuum-packed tofu and water-packed tofu produced with the soaking method (Condition 12) and in vacuum-packed tofu and water-packed tofu produced with the soak-free method (Condition 15) measured immediately after production (stored for zero months) and after being stored for two months.
FIG. 2A is a graph showing the concentrations of fructose-6-phosphate (F6P) in the soymilk produced with the soaking method (Condition 12) from the variety 1 harvested in 2022 as ingredient soybeans and in the soymilk produced with the soak-free method (Condition 15) from the same soybeans.

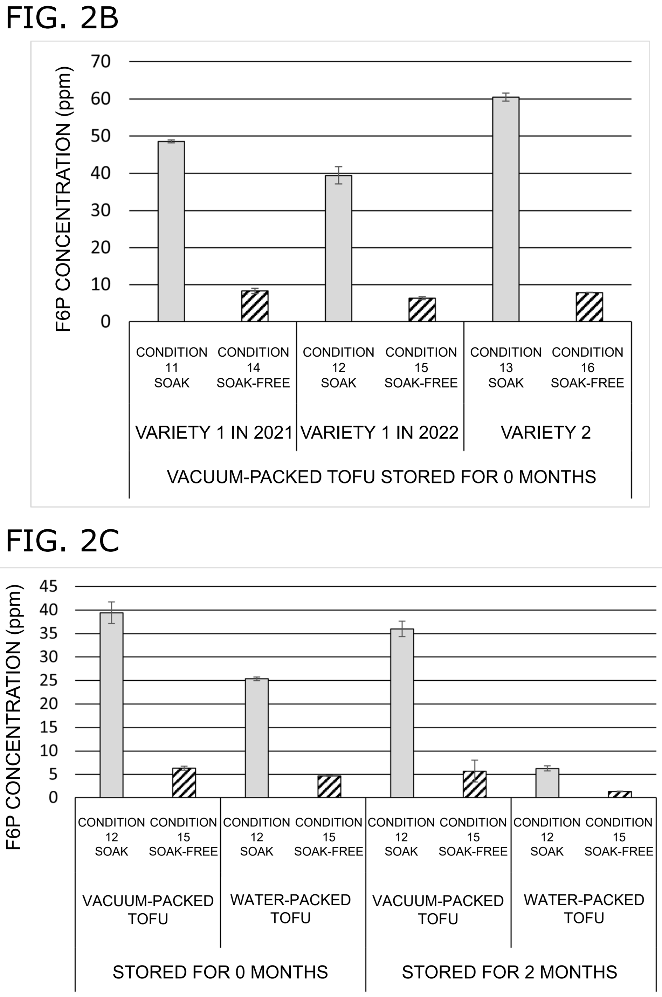

FIG. 2B is a graph showing the concentrations of F6P in the vacuum-packed tofu produced with the soaking method (Conditions 11, 12, and 13) or the soak-free method (Conditions 14, 15, and 16) from the variety 1 harvested in 2021 (Conditions 11 and 14), the variety 1 harvested in 2022 (Conditions 12 and 15), or the variety 2 (Conditions 13 and 16) as ingredient soybeans measured immediately after production (stored for zero months).
FIG. 2C is a graph showing concentrations of F6P in the vacuum-packed tofu and water-packed tofu produced with the soaking method (Condition 12) and in the vacuum-packed tofu and water-packed tofu produced with the soak-free method (Condition 15) measured immediately after production (stored for zero months) and after being stored for two months.

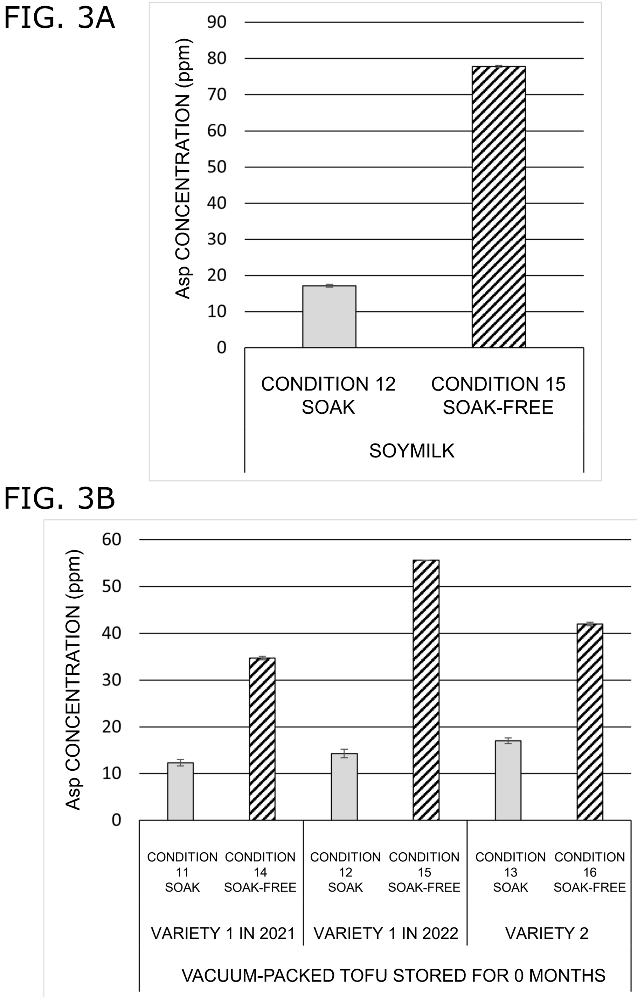

FIG. 3A is a graph showing the concentrations of aspartic acid (Asp) in the soymilk produced with the soaking method (Condition 12) from the variety 1 harvested in 2022 as ingredient soybeans and in the soymilk produced with the soak-free method (Condition 15) from the same soybeans.
FIG. 3B is a graph showing the concentrations of Asp in the vacuum-packed tofu produced with the soaking method (Conditions 11, 12, and 13) or the soak-free method (Conditions 14, 15, and 16) from the variety 1 harvested in 2021 (Conditions 11 and 14), the variety 1 harvested in 2022 (Conditions 12 and 15), or the variety 2 (Conditions 13 and 16) as ingredient soybeans measured immediately after production (stored for zero months).

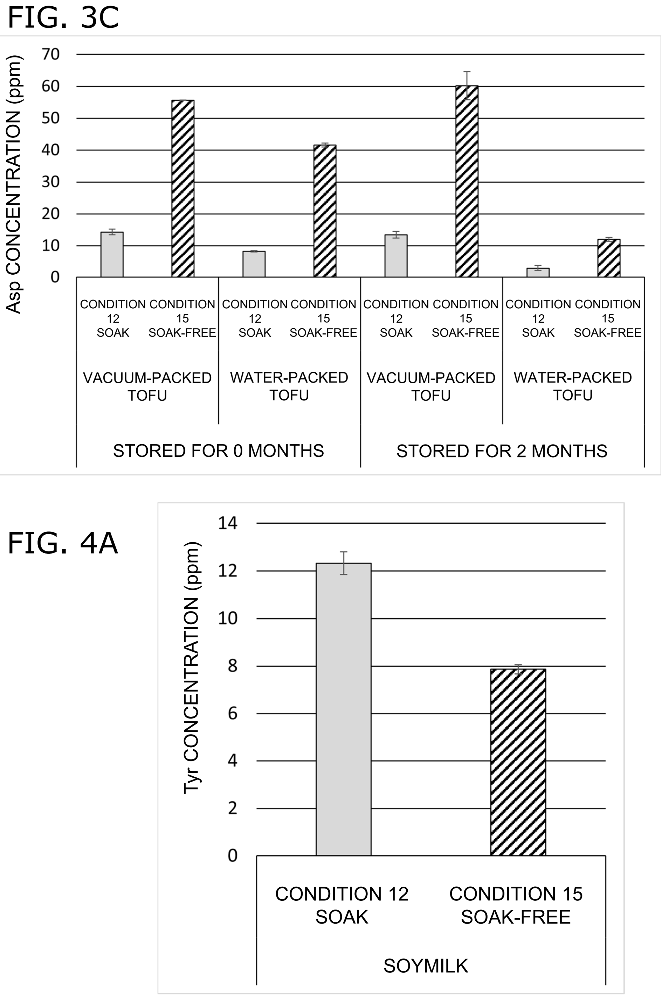

FIG. 3C is a graph showing the concentrations of Asp in the vacuum-packed tofu and water-packed tofu produced with the soaking method (Condition 12) and in the vacuum-packed tofu and water-packed tofu produced with the soak-free method (Condition 15) measured immediately after production (stored for zero months) and after being stored for two months.
FIG. 4A is a graph showing the concentrations of tyrosine (Tyr) in the soymilk produced with the soaking method (Condition 12) from the variety 1 harvested in 2022 as ingredient soybeans and in the soymilk produced with the soak-free method (Condition 15) from the same soybeans.

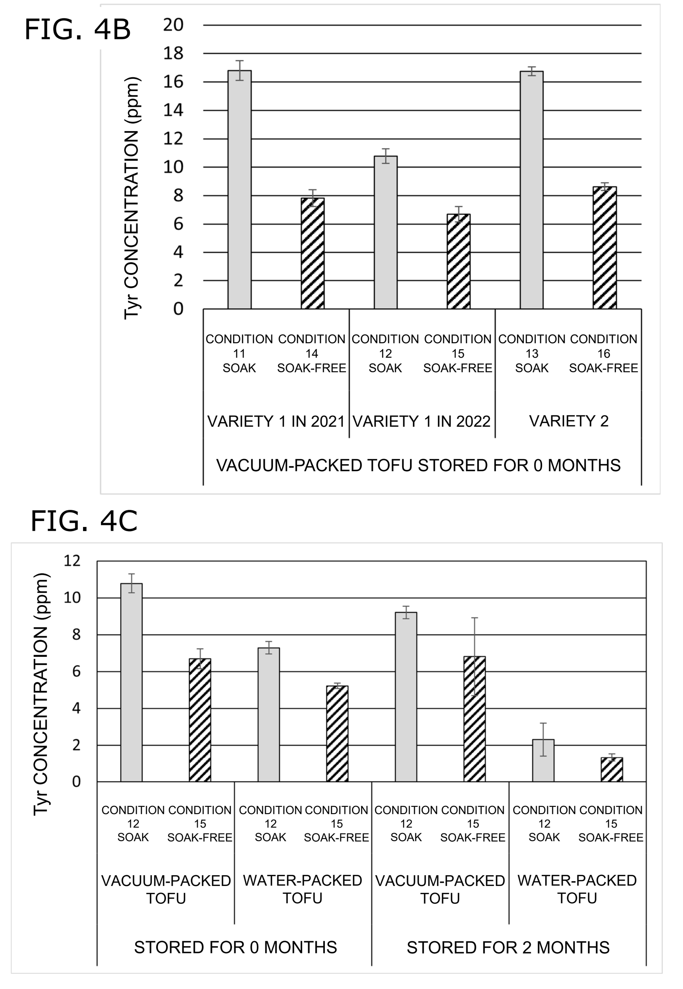

FIG. 4B is a graph showing the concentrations of Tyr in the vacuum-packed tofu produced with the soaking method (Conditions 11, 12, and 13) or the soak-free method (Conditions 14, 15, and 16) from the variety 1 harvested in 2021 (Conditions 11 and 14), the variety 1 harvested in 2022 (Conditions 12 and 15), or the variety 2 (Conditions 13 and 16) as ingredient soybeans measured immediately after production (stored for zero months).
FIG. 4C is a graph showing the concentrations of Tyr in the vacuum-packed tofu and water-packed tofu produced with the soaking method (Condition 12) and in the vacuum-packed tofu and water-packed tofu produced with the soak-free method (Condition 15) measured immediately after production (stored for zero months) and after being stored for two months.

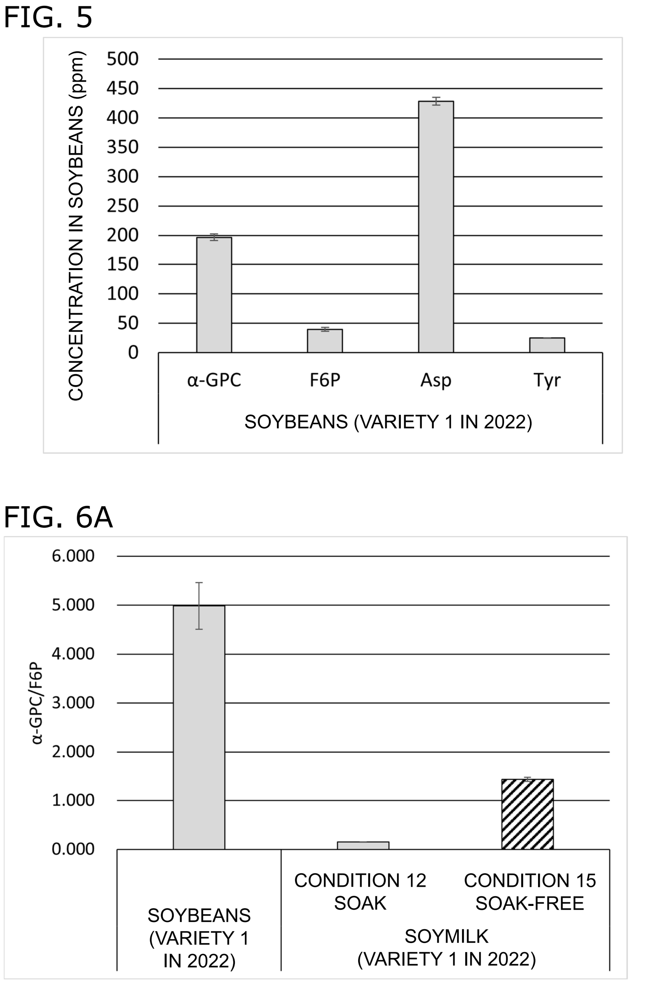

FIG. 5 is a graph showing the concentrations of α-glycerophosphocholine (α-GPC), fructose-6-phosphate (F6P), aspartic acid (Asp), and tyrosine (Tyr) in soybeans (the variety 1 harvested in 2022).
FIG. 6A is a graph showing the values of α-GPC/F6P for the soybeans (the variety 1 harvested in 2022) and the soymilk produced from the same soybeans with the soaking method (Condition 12) and with the soak-free method (Condition 15), calculated based on the concentrations of α-GPC and F6P shown in FIGs. 1A, 2A, and 5.

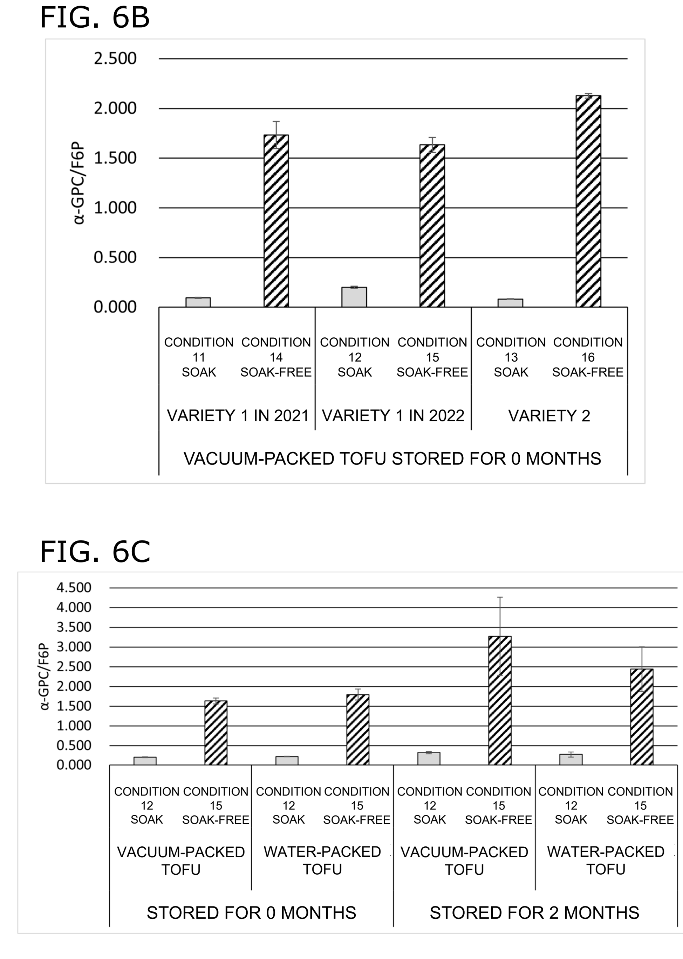

FIG. 6B is a graph showing the values of α-GPC/F6P immediately after production (stored for zero months) for the vacuum-packed tofu produced with the soaking method or the soak-free method from the variety 1 harvested in 2021, the variety 1 harvested in 2022, or the variety 2 as ingredient soybeans, calculated based on the concentrations of α-GPC and F6P shown in FIGs. 1B and 2B.
FIG. 6C is a graph showing the values of α-GPC/F6P immediately after production (stored for zero months) and after being stored for two months for the vacuum-packed tofu and water-packed tofu produced with the soaking method (Condition 12) and the vacuum-packed tofu and water-packed tofu produced with the soak-free method (Condition 15), calculated based on the concentrations of α-GPC and F6P shown in FIGs. 1C and 2C.

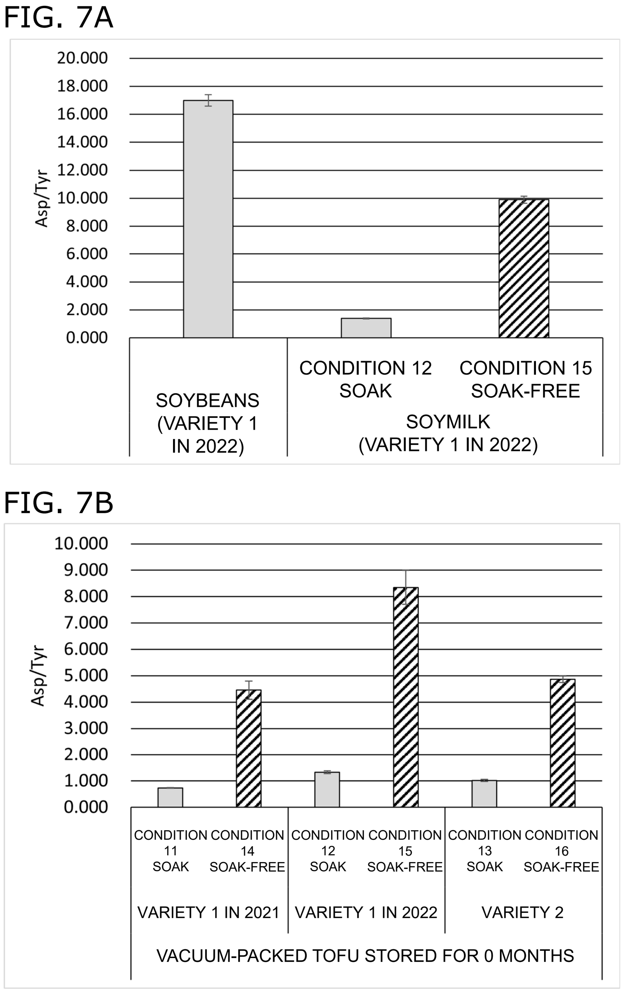

FIG. 7A is a graph showing the values of Asp/Tyr for the soybeans (the variety 1 harvested in 2022) and the soymilk produced from the same soybeans with the soaking method (Condition 12) and with the soak-free method (Condition 15), calculated based on the concentrations of Asp and Tyr shown in FIGs. 3A, 4A, and 5.
FIG. 7B is a graph showing values of Asp/Tyr of the vacuum-packed tofu produced with the soaking method or the soak-free method from the variety 1 harvested in 2021, the variety 1 harvested in 2022, or the variety 2 as ingredient soybeans measured immediately after production (stored for zero months), calculated based on the concentrations of Asp and Tyr shown in FIGs. 3B and 4B.

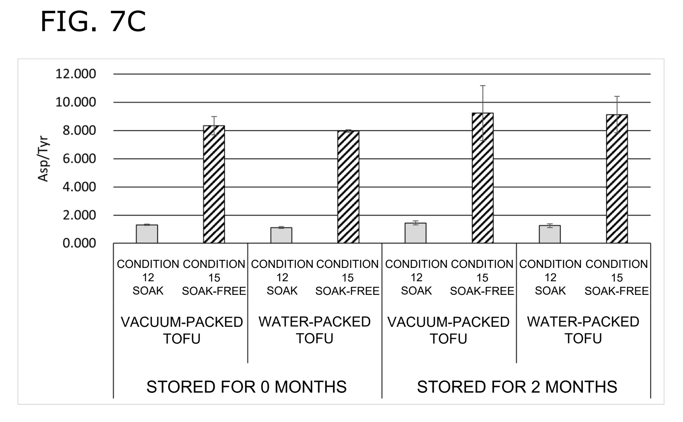

FIG. 7C is a graph showing the values of Asp/Tyr immediately after production (stored for zero months) and after being stored for two months for the vacuum-packed tofu and water-packed tofu produced with the soaking method (Condition 12) and the vacuum-packed tofu and water-packed tofu produced with the soak-free method (Condition 15) from the same soybeans, calculated based on the concentrations of Asp and Tyr shown in FIGs. 3C and 4C.

### DETAILED DESCRIPTION

One or more embodiments of the present invention will now be described in more detail.

### 1. Method for Producing Tofu

### Cracking Soybeans

Soybeans used with a method for producing tofu according to one or more embodiments of the present invention may be cracked soybeans. The cracked soybeans may be prepared in advance. Preferably, the method for producing tofu according to one or more embodiments of the present invention further includes a step of cracking (splitting) soybeans. The cracked soybeans obtained through the soybean cracking step may be used in a first mixture (described later).

Ingredient soybeans before being cracked may be any soybeans used for producing tofu and may have a water content of, for example, 8 to 15% by mass inclusive, or preferably, 10 to 14% by mass inclusive. The method for producing tofu according to the present embodiment does not include a step of soaking ingredient soybeans in water, and thus has a much shorter lead time and higher hourly productivity of tofu.

Soybeans may be cracked with any method, and cracking may be performed using an apparatus for cracking. Cracking may be performed until more than or equal to 50% by mass, or preferably, more than or equal to 80% by mass, or more preferably, 100% by mass of the soybeans have the size of a soybean divided into, for example, two to eight parts.

The step of cracking soybeans may be a step of cracking and dehulling soybeans simultaneously. In this step of cracking and dehulling soybeans simultaneously, the ingredient soybeans may not be washed with water in advance. This can reduce the amount of wastewater.

The step of cracking soybeans may include removing, for example, dehulled hulls, hypocotyls, and fine dust produced when the soybeans are cracked. The step of cracking soybeans may also include preliminarily grinding the cracked soybeans before preparing and grinding the first mixture described below as appropriate.

### Grinding First Mixture of Soybeans and Water

The method for producing tofu according to one or more embodiments of the present invention includes a step of grinding the first mixture of soybeans and water until particles of the soybeans in the first mixture have a volume median diameter less than or equal to 250 µm in a particle size distribution measured by dynamic light scattering. The soybeans used in the first mixture may be cracked soybeans. The cracked soybeans used in the first mixture may be prepared through the step described in Cracking Soybeans above.

The first mixture may contain any amount of water. However, water mixed for 100 parts by weight of soy beans (fresh weight) is preferably 450 to 1900 parts by weight inclusive, or more preferably, 550 to 1200 parts by weight inclusive, or still more preferably, 550 to 1000 parts by weight inclusive. In preparing the first mixture, soybeans and water may or may not be mixed in a single step. The soybeans may be ground with water being supplied continuously or intermittently.

The inventors have conceived the embodiments of the present invention based on an unexpected finding that the tofu prepared from slurry (also referred to as raw slurry) of the first mixture that is ground until the median diameter of soybeans is less than or equal to 250 µm had relatively high values of firmness favored in Western countries. The soymilk prepared from the first mixture that ground until the median diameter of soybeans is less than or equal to 250 µm may have a high protein concentration. For example, the protein concentration more than or equal to 4.0% by mass, or more preferably, greater than or equal to 4.1% by mass, or still more preferably, greater than or equal to 4.3% by mass may be appropriate for producing firmer tofu. The protein concentration of the soymilk prepared from the ground first mixture may have any upper limit, and may be, for example, less than or equal to 10% by mass, or preferably, less than or equal to 7.0% by mass, or more preferably, less than or equal to 6.5% by mass, or still more preferably, less than or equal to 6.0% by mass, or still more preferably, less than or equal to 5.5% by mass. In other words, the protein concentration of the soymilk prepared from the ground first mixture may be a value, for example, in the range of 4.0 to 10% by mass inclusive or in a narrower range of any combination of the upper and lower limit values described in this paragraph. The method for measuring the protein concentration of soymilk is as described in 2. Method for Producing Soymilk below.

The first mixture described above may be ground with a grinder such as a mixer or a mill that can grind soybeans to the particle size described above. The first mixture may be supplied to the grinder in a batch or continuously. Grinding in this step may be performed in multiple steps. For example, the first mixture may be ground in a step until the soybeans have the median diameter greater than 250 µm, and then in another step until the soybeans have the median diameter less than or equal to 250 µm, using grinders appropriate for the respective stages. The temperature during grinding is not limited, but may be, for example, 16 to 64 °C inclusive, and typically, 18 to 60 °C inclusive. The temperature in the grinding step may be adjusted with any method. The first mixture may be ground with a grinder that can adjust the temperature of the slurry being ground, or the mixture may be ground by supplying the first mixture that has an adjusted temperature in advance to reach a predetermined temperature when supplied to the grinder.

In this step, the first mixture is ground until the volume median diameter of the soybeans in the mixture is less than or equal to 250 µm in the particle size distribution measured by dynamic light scattering. Specific examples of the apparatuses and conditions used in measuring the median diameter are described in working examples. The median diameter of the soybeans in the ground first mixture is preferably less than or equal to 220 µm, or more preferably, less than or equal to 200 µm, or still more preferably, less than or equal to 195 µm. The median diameter of the soybeans in the ground first mixture may have any lower limit, but is preferably greater than or equal to 50 µm, or more preferably, greater than or equal to 100 µm, or still more preferably, greater than or equal to 130 µm. In other words, the median diameter of the soybeans in the ground first mixture may be a value, for example, in the range of 50 to 250 µm inclusive or in a narrower range of any combinations of the upper and lower limit values described in this paragraph.

### Heating Ground First Mixture

The method for producing tofu according to one or more embodiments of the present invention includes a step of heating the first mixture ground in the above step. The first mixture ground and heated in this step may be referred to as heated slurry.

The heating temperature in this step is not limited and is adjustable as appropriate, but is preferably higher than or equal to 95 °C, or more preferably, higher than or equal to 98 °C, and is preferably lower than or equal to 107 °C, or more preferably, 95 to 107 °C inclusive, or still more preferably, 98 to 107 °C inclusive.

The heating time in this step is not limited and is adjustable as appropriate, but is preferably 4 to 12 minutes inclusive.

### Preparing Soymilk

The method for producing tofu according to one or more embodiments of the present invention includes a step of separating the ground and heated first mixture (heated slurry) into soymilk and solid soy pulp.

Soymilk and solid soy pulp may be separated with any method, and may be separated with any solid-liquid separation method such as filtration, compression, or centrifuging. The protein concentration of soymilk may be in the ranges as described above. Soymilk separated from the solid soy pulp in this step is collected and used in the step described below.

### Coagulation

The method for producing tofu according to one or more embodiments of the present invention includes a step of obtaining tofu by coagulating a second mixture of the soymilk obtained through the above step and a coagulant.

The coagulant preferably contains at least one selected from the group consisting of calcium sulfate, magnesium chloride, calcium chloride, and glucono-delta-lactone, and more preferably, at least one selected from the group consisting of calcium sulfate and magnesium chloride. The inventors have noticed that coagulants containing these components are suitable for producing tofu with increased firmness. Among such coagulants, a coagulant containing calcium sulfate is particularly suitable for producing tofu with increased firmness. Examples of the coagulant containing calcium sulfate include gypsum powder. Examples of the coagulant containing magnesium chloride include a coagulant called nigari, such as crude magnesium chloride from seawater (saltern nigari) and emulsified nigari containing magnesium chloride and an emulsifier.

Although any amount of the coagulant may be added to the soymilk, the coagulant may be, for example, 0.01 to 1.0 parts by weight inclusive for 100 parts by weight of soymilk.

The second mixture is placed in an intended container (e.g., a first container described later) and heated at a temperature of 85 to 95 °C for 30 to 150 minutes. This can coagulate the second mixture and prepare tofu.

The tofu that is directly prepared by coagulating the second mixture in this step may be referred to as soft tofu (silken tofu). The soft tofu has firmness to cause, when a 3-cm-cubic specimen adjusted to 5 °C is compressed by a circular plunger with a diameter of 20 mm (an area of contact with the specimen being 314 mm²) at a uniform speed of 60 mm/min, a force applied on the circular plunger at the time of disruption to be, typically, greater than or equal to 290 gf (2.84 N), or preferably, greater than or equal to 300 gf (2.94 N), or more preferably, greater than or equal to 350 gf (3.43 N), or more preferably, greater than or equal to 400 gf (3.92 N), or still more preferably, greater than or equal to 450 gf (4.41 N) and to be preferably less than or equal to 600 gf (5.88 N). In other words, the force described above may have a value in the range of 290 gf (2.84 N) to 600 gf (5.88 N) inclusive or in a narrower range of any combinations of the upper and lower limit values described in this paragraph. This value of firmness is higher than the firmness of the soft tofu commonly consumed in Japan (the force at the time of disruption is about 180 to 250 gf) and is favorable firmness preferred in Western countries.

The firmness of tofu can be evaluated herein based on a force applied on a circular plunger at the time of disruption. In the evaluation, a 3-cm-cubic specimen of the tofu adjusted to 5 °C is placed on a horizontal flat surface. A circular surface of the plunger with a diameter of 20 mm is placed in contact with the upper surface of the specimen. The circular plunger compresses the specimen at a uniform speed of 60 mm/min in a direction perpendicular to the upper surface. The force described above is also referred to as a rupture load. The firmness of tofu can be measured herein with a rheometer including the circular plunger with a diameter of 20 mm. Specific conditions for measuring firmness include measurement conditions described in the working examples. Tofu firmness may be measured indoors at room temperature (20 °C).

The soft tofu prepared directly by coagulating the second mixture in this step preferably has a protein concentration less than or equal to 7.0% by mass, or more preferably, less than or equal to 6.5% by mass, or still more preferably, less than or equal to 6.0% by mass, or still more preferably, less than or equal to 5.5% by mass. Such soft tofu has a lower protein concentration than soft tofu with the same firmness produced with a known method, and thus has a reduced smell specific to soybeans. This is advantageous in seasoning the tofu. The soft tofu described above preferably further has a protein concentration greater than or equal to 4.0% by mass, or more preferably, greater than or equal to 4.1% by mass, or still more preferably, greater than or equal to 4.3% by mass. In other words, the protein concentration of the soft tofu described above may be a value, for example, in the range of 4.0 to 7.0% by mass inclusive or in a narrower range of any combination of the upper and lower limit values described in this paragraph. The method for measuring the protein concentration of tofu may be the same as the method for measuring the protein concentration of soymilk described in 2. Method for Producing Soymilk below.

### Producing Filled Tofu

In an aspect of the method for producing tofu according to one or more embodiments of the present invention, the preparing tofu described above may include filling and sealing the second mixture in a first container, and preparing the tofu by coagulating the second mixture in the first container. The tofu obtained with this aspect is referred to as filled tofu.

The tofu obtained with this aspect (filled tofu) has firmness to cause, when a 3-cm-cubic specimen adjusted to 5 °C is compressed by a circular plunger with a diameter of 20 mm at a uniform speed of 60 mm/min, a force applied on the circular plunger at the time of disruption to be typically greater than or equal to 290 gf (2.84 N), or preferably, greater than or equal to 300 gf (2.94N), or more preferably, greater than or equal to 350 gf (3.43 N), or more preferably, greater than or equal to 400 gf (3.92 N), or still more preferably, 450 gf (4.41 N) and to be preferably less than or equal to 600 gf (5.88N). In other words, the force described above may have a value in the range of 290 gf (2.84 N) to 600 gf (5.88 N) inclusive or in a narrower range of any combinations of the upper and lower limit values described in this paragraph. The method for measuring firmness is as described above.

The filled tofu described above preferably has a protein concentration less than or equal to 7.0% by mass, or more preferably, less than or equal to 6.5% by mass, or still more preferably, less than or equal to 6.0% by mass, or still more preferably, less than or equal to 5.5% by mass. The filled tofu described above has a lower protein concentration than filled tofu with the same firmness produced with a known method, and thus has a reduced smell specific to soybeans. This is advantageous in seasoning the tofu. The filled tofu preferably further has a protein concentration greater than or equal to 4.0% by mass, or more preferably, greater than or equal to 4.1% by mass, or still more preferably, greater than or equal to 4.3% by mass. In other words, the protein concentration of the filled tofu may be a value, for example, in the range of 4.0 to 7.0% by mass inclusive or in a narrower range of any combination of the upper and lower limit values described in this paragraph. The method for measuring the protein concentration of tofu may be the same as the method for measuring the protein concentration of soymilk described in 2. Method for Producing Soymilk below.

In this aspect, the first container may undergo sterilization, or more specifically, heat sterilization after the second mixture is filled and sealed in the first container. Coagulation of the second mixture in the first container and sterilization may be performed in any order or may be performed simultaneously. The sealed first container filled with the second mixture may undergo heat sterilization to allow the heat in sterilization to facilitate the coagulation of the second mixture. The sterilized filled tofu can be distributed and stored for a longer period of time. Heat sterilization is performed, for example, by heating the product with hot water at 85 to 95 °C for 30 to 150 minutes.

In this aspect, the first container may be any container that can be filled with the second mixture and sealed, including, for example, a container formed from a soft material such as a resin film, a resin sheet, a resin metal-laminated film, or paper.

### Producing Soft Tofu

Another aspect of the method for producing tofu according to one or more embodiments of the present invention may further include, after the preparing tofu described above, filling and sealing the prepared tofu (soft tofu) in a second container. In this aspect, the prepared tofu is cut as appropriate to conform to the size and shape of the second container before being filled and sealed in the second container.

In this aspect as well, the sealed second container filled with the tofu described above may undergo sterilization, or more specifically, heat sterilization.

In this aspect, the second container may be any container that can be filled with tofu and sealed, and may be, for example, a container formed from a soft material such as a resin film, a resin sheet, a resin metal-laminated film, or paper.

### Producing Firm Tofu

Still another aspect of the method for producing tofu according to one or more embodiments of the present invention may further include, after the preparing tofu described above, breaking the tofu into broken tofu, and preparing firm tofu (cotton tofu) by compressing the broken tofu in a mold.

The firm tofu may have firmness to cause, when a 3-cm-cubic specimen adjusted to 5 °C is compressed by a circular plunger with a diameter of 20 mm at a uniform speed of 60 mm/min, a force applied on the circular plunger at the time of disruption to be preferably greater than or equal to 400 gf (3.92 N), or more preferably, greater than or equal to 450 gf (4.41 N), or more preferably, greater than or equal to 500 gf (4.90 N), or still more preferably, greater than or equal to 600 gf (5.88N), or still more preferably, greater than or equal to 700 gf (6.86 N), or still more preferably, greater than or equal to 750 gf (7.35 N) and to be preferably less than or equal to 3000 gf (29.4 N), or more preferably, less than or equal to 2500 gf (24.5 N). In other words, the force described above may be a value, for example, in the range of 400 gf (3.92 N) to 3000 gf (29.4 N) inclusive or in a narrower range of any combination of the upper and lower limit values described in this paragraph. The method for measuring the firmness of tofu is as described above. This value of firmness is higher than the firmness of cotton tofu commonly consumed in Japan (the force at the time of disruption is about 250 to 350 gf) and is favorable firmness preferred in Western countries.

The firm tofu described above preferably has a protein concentration less than or equal to 15.0% by mass, or more preferably, less than or equal to 13.0% by mass. The firm tofu described above has a lower protein concentration than firm tofu with the same firmness produced with a known method, and thus has a reduced smell specific to soybeans. This is advantageous in seasoning the tofu. The firm tofu described above preferably further has a protein concentration greater than or equal to 5.0% by mass, or more preferably, greater than or equal to 6.0% by mass. In other words, the protein concentration of the firm tofu may be a value, for example, in the range of 5.0 to 15.0% by mass inclusive or in a narrower range of any combination of the upper and lower limit values described in this paragraph. The method for measuring the protein concentration of tofu may be the same as the method for measuring the protein concentration of soymilk described in 2. Method for Producing Soymilk below.

This aspect more preferably includes filling and sealing the prepared firm tofu described above in a third container and performing sterilization, or still more preferably, heat sterilization. Heat sterilization is performed, for example, by boiling the product at 85 to 95 °C for 30 to 150 minutes.

In this aspect, the third container may be any container that can be filled with firm tofu and sealed, and may be, for example, a container formed from a soft material such as a resin film, a resin sheet, a resin metal-laminated film, or paper.

### 2. Method for Producing Soymilk

The method for producing soymilk according to one or more other embodiments of the present invention includes a step of grinding a first mixture of soybeans and water until particles of the soybeans in the first mixture have a volume median diameter less than or equal to 250 µm in a particle size distribution measured by dynamic light scattering, a step of heating the ground first mixture, and a step of separating the ground and heated first mixture into soymilk and solid soy pulp.

Soymilk produced with the method according to the present embodiment is suitable for producing tofu with increased firmness. The soymilk produced with the method according to the present embodiment has or preferably has a higher protein concentration. The protein concentration is, for example, greater than or equal to 4.0% by mass, or more preferably, greater than or equal to 4.1% by mass, or still more preferably, greater than or equal to 4.3% by mass. The protein concentration may have any upper limit, and is, for example, less than or equal to 10% by mass, or preferably, less than or equal to 7.0% by mass. In other words, the protein concentration may be a value in the range of 4.0 to 10% by mass inclusive or in a narrower range of any combination of the upper and lower limit values described in this paragraph. Unless otherwise specified, the total nitrogen content of soymilk is measured herein, and the protein concentration of soymilk herein is calculated based on the measured total nitrogen content using a nitrogen-protein conversion factor 6.25 specified in the Codex standard (CODEX GENERAL STANDARD FOR SOY PROTEIN PRODUCTS CODEX STAN175-1989). The total nitrogen content of soymilk can be measured with a near-infrared analyzer (e.g., NIRFlex N-500, Buchi).

Soybeans used with the method for producing soymilk according to the present embodiment may be cracked soybeans. The cracked soybeans may be prepared in advance. Preferably, the method for producing soymilk according to the present embodiment further includes a step of cracking soybeans. The soybeans obtained in the step of cracking soybeans described above may be used in the first mixture.

The steps in the method for producing soymilk according to the present embodiment may be performed in the same manner as the respective steps described in the method for producing tofu until the ground and heated first mixture is separated into soymilk and solid soy pulp.

### 3. Tofu

One or more other embodiments of the present invention are directed to packaged tofu including a container and tofu, wherein the tofu is prepared by filling and sealing a mixture containing soymilk and a coagulant in the container and coagulating the mixture in the container, wherein the tofu has firmness that causes, when a 3-cm-cubic specimen adjusted to 5 °C is compressed by a circular plunger with a diameter of 20 mm at a uniform speed of 60 mm/min, a force applied on the circular plunger at the time of disruption to be greater than or equal to 290 gf, and wherein the tofu has a protein concentration less than or equal to 7.0% by mass.

The tofu in the packaged tofu according to the present embodiment preferably has the features of the filled tofu (in particular, the features in, for example, the firmness, the protein concentration, and the production method) described in Producing Filled Tofu under 1. Method for Producing Tofu above. The tofu described above preferably contains calcium sulfate. The calcium sulfate may be added as a coagulant. The container for the packaged tofu according to the present embodiment preferably has the features of the first container described in Producing Filled Tofu under 1. Method for Producing Tofu above.

One or more other embodiments of the present invention are directed to packaged tofu including a container and tofu, wherein the tofu is filled and sealed in the container, wherein the tofu has firmness to cause, when a 3-cm-cubic specimen adjusted to 5 °C is compressed by a circular plunger with a diameter of 20 mm at a uniform speed of 60 mm/min, a force applied on the circular plunger at the time of disruption to be greater than or equal to 400 gf, and wherein the tofu has a protein concentration less than or equal to 15.0% by mass.

The tofu in the packaged tofu according to the present embodiment preferably has the features of the firm tofu (in particular, the features in, for example, the firmness, the protein concentration, and the production method) described in Producing Firm Tofu under 1. Method for Producing Tofu above. The tofu described above preferably contains calcium sulfate. The calcium sulfate may be added as a coagulant. The container for the packaged tofu according to the present embodiment has the features of the third container described in Producing Firm Tofu under 1. Method for Producing Tofu above.

### 4. Other Aspects of the Present Invention

### 4.1 Tofu

One or more embodiments of another aspect of the present invention are directed to packaged tofu including a container and tofu filled and sealed in the container, wherein, in the tofu, the concentration of α-glycerophosphocholine by mass is greater than or equal to 0.40 times the concentration of fructose-6-phosphate by mass, and the concentration of aspartic acid by mass is greater than or equal to 1.60 times the concentration of tyrosine by mass, and wherein the tofu has firmness to cause, when a 3-cm-cubic specimen of the tofu adjusted to 5 °C is compressed by a circular plunger with a diameter of 20 mm at a uniform speed of 60 mm/min, a force applied on the circular plunger at the time of disruption to be greater than or equal to 290 gf.

Hereafter, the ratio of the concentration of α-glycerophosphocholine to the concentration of fructose-6-phosphate based on mass may be referred to as α-GPC/F6P, and the ratio of the concentration of aspartic acid to the concentration of tyrosine may be referred to as Asp/Tyr. Hereafter, α-Glycerophosphocholine may be referred to as α-GPC, fructose-6-phosphate may be referred to as F6P, aspartic acid may be referred to as Asp, and tyrosine may be referred to as Tyr.

The inventors have noticed the difference in composition that tofu and soymilk produced with the soybean-soak-free production method have α-GPC/F6P greater than or equal to 0.40 and Asp/Tyr greater than or equal to 1.60, whereas tofu and soymilk produced with a soybean-soak production method including a step of soaking soybeans in water for 60 minutes or longer to cause the soybeans to absorb water have α-GPC/F6P less than 0.40 or Asp/Tyr less than 1.60. The inventors have also noticed that soybeans have α-GPC/F6P greater than or equal to 0.40 and Asp/Tyr greater than or equal to 1.60, similarly to the tofu and soymilk produced with the soybean-soak-free production method. Since the soybean-soak production method includes the step of soaking soybeans in water for a long time in which metabolic and enzymatic reactions progress, the produced tofu and soymilk have a component composition that differs greatly from the component composition of the soybeans. The soybean-soak-free production method, however, includes no step of soaking soybeans in water for a long time. Thus, the produced tofu and soymilk may have a component composition similar to that of soybeans.

In other words, the tofu in the packaged tofu according to the present embodiment is preferable in its relatively high firmness and its component composition close to the soybeans used as an ingredient. Such tofu with characteristic firmness and a characteristic component composition can be produced with the method for producing tofu described in 1. Method for Producing Tofu above, or in other words, with a method including a step of grinding a first mixture of soybeans and water until the soybeans in the first mixture have a volume median diameter less than or equal to 250 µm in a particle size distribution measured by dynamic light scattering, a step of heating the ground first mixture, a step of separating the ground and heated first mixture into soymilk and solid soy pulp, and a step of preparing tofu by coagulating a second mixture of the soymilk and a coagulant.

Still other aspects of the method for producing tofu are described in 1. Method for Producing Tofu above.

In the tofu in the packaged tofu according to the present embodiment, α-GPC/F6P is preferably 0.40 to 6.00 inclusive, or more preferably, 0.50 to 5.00 inclusive, or more preferably, 0.75 to 4.50 inclusive, or more preferably, 1.00 to 4.00 inclusive, or still more preferably, 1.25 to 3.50 inclusive. In the tofu in the packaged tofu according to the present embodiment, Asp/Tyr is preferably 1.60 to 18.00 inclusive, or more preferably, 2.00 to 12.00 inclusive, or more preferably, 3.00 to 11.00 inclusive. The ranges for α-GPC/F6P and Asp/Tyr described above may be combined as appropriate. For example, in the tofu in the packaged tofu according to the present embodiment, α-GPC/F6P may be 0.40 to 6.00 inclusive and Asp/Tyr may be 1.60 to 18.00 inclusive. Each of α-GPC/F6P and Asp/Tyr may be further limited in the more specific ranges described above independently.

The concentrations of the four components in the tofu in the packaged tofu according to the present embodiment are to satisfy the above ratios, and may be, but not limited to, in the ranges below. The α-glycerophosphocholine (α-GPC) concentration in the tofu (by mass) may be preferably 1 to 30 ppm inclusive, or more preferably, 2 to 20 ppm inclusive, or still more preferably, 3 to 18 ppm inclusive. The fructose-6-phosphate (F6P) concentration in the tofu (by mass) may be preferably 0.5 to 30 ppm inclusive, or more preferably, 0.8 to 20 ppm inclusive, or still more preferably, 1 to 10 ppm inclusive. The aspartic acid (Asp) concentration in the tofu (by mass) may be preferably 5 to 100 ppm, or more preferably, 7 to 80 ppm inclusive, or still more preferably, 10 to 70 ppm inclusive. The tyrosine (Tyr) concentration in the tofu (by mass) may be preferably 0.5 to 30 ppm inclusive, or more preferably, 0.8 to 20 ppm inclusive, or still more preferably, 1 to 10 ppm inclusive. The concentration of each of α-GPC, F6P, Asp, and Tyr described above may also be a converted concentration of the corresponding component when the protein concentration in the tofu is converted to 5.0% by mass.

The concentrations of α-GPC, F6P, Asp, and Tyr in tofu or soymilk can be measured with a method using liquid chromatography mass spectrometry (LCMS), or more specifically, a method described in 4.3. Method for Component Analysis in Experiment 4 of the working examples.

The tofu in the packaged tofu according to the present embodiment features firmness to cause the force described above to be greater than or equal to 290 gf, or more preferably, greater than or equal to 400 gf. The method for measuring the force is as described in 1. Method for Producing Tofu.

In a first embodiment of the packaged tofu according to the present embodiment, the tofu may feature firmness to cause the force described above to be greater than or equal to 290 gf, and a protein concentration less than or equal to 7.0% by mass. In the first embodiment, the tofu is preferably either filled tofu prepared by filling and sealing soymilk and a coagulant in the container and coagulating the soymilk and the coagulant in the container or soft tofu obtained by mixing soymilk and a coagulant in another container, or more preferably, filled tofu. The filled tofu used as the tofu in the first embodiment preferably has features (in particular, the features in, for example, the firmness, the protein concentration, and the production method) of filled tofu described in Producing Filled Tofu under 1. Method for Producing Tofu above. The soft tofu used as the tofu in the first embodiment preferably has features (in particular, the features in, for example, the firmness, the protein concentration, and the production method) of soft tofu described in Coagulation and Producing Soft Tofu under 1. Method for Producing Tofu above. In the first embodiment, the tofu preferably contains calcium sulfate. The calcium sulfate may be added as a coagulant. The container for the packaged tofu according to the first embodiment preferably has features of the first container described in Producing Filled Tofu under 1. Method for Producing Tofu above or the second container described in Producing Soft Tofu under 1. Method for Producing Tofu above.

In a second embodiment of the packaged tofu according to the present embodiment, the tofu may feature firmness to cause the force to be greater than or equal to 400 gf, and a protein concentration less than or equal to 15.0% by mass. In the second embodiment, the tofu is preferably firm tofu prepared by breaking the tofu obtained by mixing and coagulating soymilk and a coagulant into broken tofu and compressing the broken tofu in a mold. The firm tofu that can be used as the tofu in the second embodiment preferably has features (in particular, the features in, for example, the firmness, the protein concentration, and the production method) of firm tofu described in Producing Firm Tofu under 1. Method for Producing Tofu above. In the second embodiment, the tofu preferably contains calcium sulfate. The calcium sulfate may be added as a coagulant. The container for the packaged tofu according to the second embodiment preferably has features of the third container described in Producing Firm Tofu under 1. Method for Producing Tofu above.

### 4.2. Method for Identifying Tofu or Soymilk Produced with Soybean-Soak-Free Production Method

One or more other embodiments of another aspect of the present invention are directed to a method for identifying tofu or soymilk produced with a soybean-soak-free production method including no step of soaking soybeans in water for 60 minutes or longer to cause the soybeans to absorb the water. The method includes a step of measuring concentrations by mass of α-glycerophosphocholine, fructose-6-phosphate, aspartic acid, and tyrosine in tofu or soymilk as a test target, and a step of determining that the tofu or soymilk as the test target is tofu or soymilk produced with the soybean-soak-free production method when the concentration of α-glycerophosphocholine is greater than or equal to 0.40 times the concentration of fructose-6-phosphate and the concentration of aspartic acid is greater than or equal to 1.60 times the concentration of tyrosine.

The method according to the present embodiment allows identification of the tofu or soymilk produced with the soybean-soak-free production method with a simple method.

In the present embodiment, the step of soaking soybeans in water for 60 minutes or longer to allow the soybeans to absorb the water refers to a step of soaking soybeans as an ingredient in water for 60 minutes or longer, or a long period of time such as 5 hours or longer, 10 hours or longer, or 12 hours or longer, to allow the soybeans to absorb water. Soybeans used as the ingredient may include whole soybeans that are not dehulled, and cracked soybeans (e.g., soybeans divided into two to eight parts). The whole soybeans and the cracked soybeans may be dehulled. The method for producing tofu and soymilk including the above step is referred to as a soybean-soak production method. The soybean-soak production method includes, for example, the above step, a step of grinding soybeans to obtain slurry after the above step, a step of heating the soybean slurry, and a step of separating the ground and heated slurry into solid soy pulp and soymilk. When tofu is produced, the method further includes a step of mixing the soymilk and a coagulant, and preparing the tofu by coagulating the soymilk. The inventors have noticed that, as described in 4.1. Tofu, α-GPC/F6P is greater than or equal to 0.40 and Asp/Tyr is greater than or equal to 1.60 in the soybeans as an ingredient, whereas α-GPC/F6P is less than 0.40 or Asp/Tyr is less than 1.60 in tofu or soymilk produced with the soybean-soak production method. Such differences may result from the reactions occurring while soybeans are soaked in water for a long time. The reactions may have greatly changed the component composition of the tofu or soymilk produced with the soybean-soak production method from the component composition of the soybeans.

In the present embodiment, the soybean-soak-free production method refers to a method for producing tofu or soymilk that does not include the step of soaking soybeans in water for 60 minutes or longer to allow the soybeans to absorb the water as described above. The soybean-soak-free production method may include a step of soaking soybeans in water for, for example, a short period of time less than 60 minutes to allow the soybeans to absorb water. The soybean-soak-free production method does not include soaking soybeans in water for a long time. This method thus allows production of tofu and soymilk having a component composition similar to that of soybeans with α-GPC/F6P greater than or equal to 0.40 and Asp/Tyr greater than or equal to 1.60.

Examples of the soybean-soak-free production method for producing tofu include the method described in 1. Method for Producing Tofu herein, or in other words, a method for producing tofu including a step of grinding a first mixture of soybeans and water until particles of the soybeans in the first mixture have a volume median diameter less than or equal to 250 µm in a particle size distribution measured by dynamic light scattering, a step of heating the ground first mixture, a step of separating the ground and heated first mixture into soymilk and solid soy pulp, and a step of preparing tofu by coagulating a second mixture of the soymilk and the coagulant.

Still other aspects of the method for producing tofu are described in 1. Method for Producing Tofu herein.

Examples of the soybean-soak-free production method for producing soymilk include the method described in 2. Method for Producing Soymilk herein, or in other words, a method for producing soymilk including a step of grinding a first mixture of soybeans and water until particles of the soybeans in the first mixture have a volume median diameter less than or equal to 250 µm in a particle size distribution measured by dynamic light scattering, a step of heating the ground first mixture, and a step of separating the ground and heated first mixture into soymilk and solid soy pulp.

Further aspects of the method for producing soymilk are described in 2. Method for Producing Soymilk herein.

Tofu or soymilk as a test target refers to tofu or soymilk that is tested to determine whether the tofu or soymilk is produced with the soybean-soak-free production method.

The step of measuring the concentrations by mass of α-GPC, F6P, Asp, and Tyr in the tofu or soymilk as a test targe is, for example, a step of measuring the respective components with LCMS, or more specifically, the step of measuring the concentrations by mass of α-GPC, F6P, Asp, and Tyr with the method described in 4.3. Method for Component Analysis in Experiment 4 of the working examples. The method for measuring each component is not limited to a method using LCMS, and may be another method.

Furthermore, when the measured concentration of α-GPC is greater than or equal to 0.40 times the concentration of F6P (in other words, α-GPC/F6P is greater than or equal to 0.40) and the concentration of Asp is greater than or equal to Tyr (in other words, Asp/Tyr is greater than or equal to 1.60), the tofu or soymilk as a test target can be determined as the tofu or soymilk produced with the soybean-soak-free production method. In one aspect, α-GPC/F6P is preferably greater than or equal to 0.50, or more preferably, greater than or equal to 0.75, or more preferably, greater than or equal to 1.00, or still more preferably, greater than or equal to 1.25, and Asp/Tyr is preferably greater than or equal to 2.00, or more preferably, greater than or equal to 3.00 to allow determination that the tofu or soymilk as a test target is the tofu or soymilk produced with the soybean-soak-free production method. In another aspect, the range of α-GPC/F6P for determining that tofu or soymilk is produced with the soybean-soak-free production method is preferably 0.40 to 6.00 inclusive, or more preferably, 0.50 to 5.00 inclusive, or more preferably, 0.75 to 4.50 inclusive, or more preferably, 1.00 to 4.00 inclusive, or still more preferably, 1.25 to 3.50 inclusive, and the range of Asp/Tyr is preferably 1.60 to 18.00 inclusive, or more preferably, 2.00 to 12.00 inclusive, or more preferably, 3.00 to 11.00 inclusive. The ranges for α-GPC/F6P and Asp/Tyr described above may be combined as appropriate.

In the present embodiment, the concentrations of the above four components in tofu or soymilk determined as the tofu or soymilk produced with the soybean-soak-free production method are to satisfy the ratios described above. Examples of the concentrations include, but are not limited to, the ranges described below. The α-glycerophosphocholine (α-GPC) concentration in the tofu or soymilk (by mass) is preferably 1 to 30 ppm inclusive, or more preferably, 2 to 20 ppm inclusive, or still more preferably, 3 to 18 ppm inclusive. The fructose-6-phosphate (F6P) concentration in the tofu or soymilk (by mass) is preferably 0.5 to 30 ppm inclusive, or more preferably, 0.8 to 20 ppm inclusive, or still more preferably, 1 to 10 ppm inclusive. The aspartic acid (Asp) concentration in the tofu or soymilk (by mass) is preferably 5 to 100 ppm inclusive, or more preferably, 7 to 80 ppm inclusive, or still more preferably, 10 to 70 ppm inclusive. The tyrosine (Tyr) concentration in the tofu or soymilk (by mass) is preferably 0.5 to 30 ppm inclusive, or more preferably, 0.8 to 20 ppm inclusive, or still more preferably, 1 to 10 ppm inclusive. The concentration of each of α-GPC, F6P, Asp, and Tyr in tofu or soymilk described above may also be a converted concentration of the corresponding component when the protein concentration of the tofu or soymilk is converted to 5.0% by mass.

Although the embodiments of the present invention will be described in detail below with reference to the working examples, the scope of the present invention is not limited to these working examples.

### Working Examples

All the operations without specific temperatures were performed at room temperature (about 20 °C).

### Experiment 1

### 1.1. Producing Soymilk

### (1) Dehulling Step

Ingredient soybeans were roughly cracked and dehulled using a cracking apparatus manufactured by Yamamoto Ironworks Cooperation as a cracking apparatus.

### (2) Step of Pulverizing with Water

A mixture of soybeans and water (first mixture) was prepared by adding 734 parts by weight of water to 100 parts by weight of the dehulled soybeans. The first mixture was ground using a Vitamix Professional Series (Vitamix) as a grinder until the soybeans had the temperatures and particle sizes shown in the table below. The soybeans were thus pulverized (pulverized with water). Temperatures were measured with a digital thermometer manufactured by ICHINEN Co., LTD.

The temperature of the first mixture at the start of grinding was adjusted to 30.0 °C in Working Examples 1-1 and 2-1, 40.0 °C in Working Examples 1-2 and 2-2, and 50.0 °C in Working Examples 1-3 and 2-3. For the first mixture at the end of grinding, the temperature readings were 44.5 °C in Working Examples 1-1 and 2-1, 51.3 °C in Working Examples 1-2 and 2-2, and 57.4 °C in Working Examples 1-3 and 2-3.

In Working Examples 1-1, 2-1, 1-2, 2-2, 1-3, and 2-3, the first mixture was ground for adjusted periods of time until the soybeans have particle sizes less than or equal to 250 µm. The table below shows measured particle sizes of soybeans pulverized with water in each of the working examples.

The particle size of soybeans in the ground first mixture herein refers to the value of the volume particle diameter (median diameter) in a particle size distribution measured by dynamic light scattering. A laser diffraction/scattering particle size distribution analyzer (LA-950V2) manufactured by HORIBA, Ltd. can be used as a particle size measurement apparatus using dynamic light scattering. Measurement can be performed based on the product guidance.

In Comparative Examples 1 to 4, a step of pulverizing with water was performed in the same manner as in the working examples, except that the grinding conditions were adjusted to cause the soybeans to have the temperatures and particle sizes shown in the table below. The temperature at the end of grinding was not measured in Comparative Examples 1 to 4.

### (3) Heating Step

The first mixture ground in the step of pulverizing with water was heated in a pan on an open flame for about 10 minutes. The ground and heated first mixture is referred to as heated slurry.

### (4) Separating Step

The heated slurry was separated into soymilk and solid soy pulp with a centrifuge. The soymilk was then cooled to 5 °C.

### 1.2. Producing Filled Tofu

To 100 parts by weight of soymilk in Working Examples 1-1, 1-2, and 1-3 and Comparative Examples 1, 2, 3, and 4 obtained in 1.1. Producing Soymilk above, 0.5 parts by weight of saltern nigari (containing 20% by mass of magnesium chloride) was added and mixed as a coagulant to prepare second mixtures. Each of the second mixtures was filled and sealed in a molding container, underwent heat sterilization with hot water at 90 °C for 120 minutes, and coagulated to form filled tofu.

A 3-cm-cubic specimen of the sterilized filled tofu obtained as described above was adjusted to 5 °C and placed on a horizontal flat surface of a stage in the device described below. A circular surface of a circular plunger with a diameter of 20 mm was placed to be in contact with the upper surface of the specimen. The specimen was compressed with the circular plunger in a direction perpendicular to the upper surface at a uniform speed of 60 mm/min. A force applied on the circular plunger at the time of disruption (hereafter, also simply referred to as firmness) was shown in the table below. The force (firmness) herein was measured as described below.

### Measurement method

Instrument: Rheometer manufactured by Sun Scientific Co., Ltd.
Plunger: Circular (20 mm in diameter)
Measurement Condition:
   Tofu sample: 3-cm cube adjusted to 5 °C before measurement
   Mode: 20
   Measurement speed: 60 mm/min
   Movement method: Compression
   Maximum load: 20 N

### 1.3. Producing Firm Tofu

To 100 parts by weight of soymilk in Working Examples 2-1, 2-2, and 2-3 obtained in 1.1. Producing Soymilk above, 0.3 parts by weight of gypsum powder (calcium sulfate) were added and mixed as a coagulant. Heating was performed at 90 °C for 20 minutes to obtain coagulated products. Each of the coagulated products was broken into broken tofu. The broken tofu was placed in a mold and compressed in the mold to produce firm tofu (cotton tofu). The firm tofu was then boiled and sterilized at 90 °C for 60 minutes to be sterilized firm tofu.

### 1.4. Results

The tables below show the results. Evaluation of the filled tofu was performed by eating the filled tofu. Tofu with favorable springiness and firmness characteristic of filled tofu is rated as A, and tofu without such springiness and firmness was rated as F. Evaluation of the firm tofu was performed by eating the firm tofu. Tofu with favorable springiness and firmness characteristic of firm tofu was rated as A, and tofu without such springiness and firmness was rated as F.

**Table 1**

| FILLED TOFU | | | | | | | |
|---|---|---|---|---|---|---|---|
| | WORKING EXAMPLE | | | COMPARATIVE EXAMPLE | | | |
| | 1-1 | 1-2 | 1-3 | 1 | 2 | 3 | 4 |
| TEMPERATURE OF MIXTURE AT START OF GRINDING (° C) | 30.0 | 40.0 | 50.0 | 25.0 | 30.0 | 30.0 | 35.0 |
| TEMPERATURE OF MIXTURE AT END OF GRINDING (° C) | 44.5 | 51.3 | 57.4 | - | - | - | - |
| PARTICLE SIZE OF SOYBEANS PULVERIZED WITH WATER (*µ*m) | 156 | 151 | 166 | >300 | >350 | >500 | >300 |
| FIRMNESS OF FILLED TOFU (gf) | 413.6 | 435.8 | 523.2 | 246.5 | 130.0 | 130.8 | 221.8 |
| EVALUATION OF FILLED TOFU | A | A | A | F | F | F | F |

**Table 2**

| FIRM TOFU | | | |
|---|---|---|---|
| | WORKING EXAMPLE | | |
| | 2-1 | 2-2 | 2-3 |
| TEMPERATURE OF MIXTURE AT START OF GRINDING (° C) | 30.0 | 40.0 | 50.0 |
| TEMPERATURE OF MIXTURE AT END OF GRINDING (° C) | 44.5 | 51.3 | 57.4 |
| PARTICLE SIZE OF SOYBEANS PULVERIZED WITH WATER (*µ*m) | 174 | 184 | 190 |
| FIRMNESS OF FIRM TOFU (gf) | 812.2 | 987.3 | 850.5 |
| EVALUATION OF FIRM TOFU | A | A | A |

For comparison, the firmness of commercially available tofu from three manufactures was measured under the same conditions described above. Firmness measurements were performed on three samples to determine the average. The table below shows the results.

**Table 3**

| | PRODUCT FROM COMPANY A | PRODUCT FROM COMPANY B | PRODUCT FROM COMPANY C |
|---|---|---|---|
| FIRMNESS OF FILLED TOFU (gf) | 270.7 | 229.0 | 166.0 |
| FIRMNESS OF SILKEN TOFU (gf) | 252.7 | 212.0 | - |
| FIRMNESS OF COTTON TOFU (gf) | 349.3 | 263.0 | - |

### Experiment 2

### 2.1. Producing Soymilk

Soymilk was prepared from ingredient soybeans with the procedure described in Experiment 1, except that the step of pulverizing with water was performed under the conditions below.

In the step of pulverizing with water, 2000 g of the first mixture of 100 parts by weight of dehulled soybeans and 734 parts by weight of water was ground with the grinder described in Experiment 1 for 70 seconds (Condition 1), 90 seconds (Condition 2), 135 seconds (Condition 3), or 180 seconds (Condition 4) to pulverize the soybeans in the first mixture with water. The first mixture was prepared with water at room temperature (about 20 °C). The temperature of the first mixture was not controlled during the grinding.

The particle size (median diameter) of the soybeans in the ground first mixture was measured in the same manner as in Experiment 1.

The total nitrogen content of the soymilk prepared from the first mixture ground under each condition was measured with a near-infrared analyzer (NIRFlex N-500, Buchi). The measured value was multiplied by the nitrogen-protein conversion factor 6.25, to obtain the protein concentration.

### 2.2. Producing Filled Tofu

The soymilk obtained under each of Conditions 1 to 4 in 2.1. Producing Soymilk above was used to produce sterilized filled tofu with the procedure described in 1.2. Producing Filled Tofu in Experiment 1. The firmness was measured.

### 2.3. Producing Firm Tofu

The soymilk obtained under Conditions 1 to 4 in 2.1. Producing Soymilk was used to produce sterilized firm tofu with the procedure described in 1.3. Producing Firm Tofu in Experiment 1. The firmness was measured.

### 2.4. Results

The tables below show the results. Under each of Conditions 2 to 4, the obtained filled tofu had firmness greater than or equal to 300 gf that is favorable for filled tofu, and the obtained firm tofu had firmness greater than or equal to 400 gf that is favorable for firm tofu. The filled tofu produced under Condition 1 had firmness of 282 gf. The firm tofu produced under Condition 1 had firmness of 384 gf. Under each of Conditions 2 to 4 with a longer grinding time in the step of pulverizing with water, the soybeans were pulverized to have particle sizes less than or equal to 250 µm. This may have caused an increase in the concentration of dissolved protein and increased the firmness of the filled tofu and the firm tofu.

**Tabel 4**

| CONDITION | GRINDING TIME (SECOND) | SOYBEAN PARTICLE SIZE (*µ*m) | PROTEIN CONCENTRATION (% BY MASS) | FIRMNESS OF FILLED TOFU (gf) |
|---|---|---|---|---|
| 1 | 70 | 290 | 3.93 | 282 |
| 2 | 90 | 178 | 4.38 | 309 |
| 3 | 135 | 143 | 4.89 | 414 |
| 4 | 180 | 150 | 5.01 | 495 |

**Table 5**

| CONDITION | GRINDING TIME (SECOND) | SOYBEAN PARTICLE SIZE (*µ*m) | FIRMNESS OF FIRM TOFU (gf) |
|---|---|---|---|
| 1 | 70 | 290 | 384 |
| 2 | 90 | 178 | 467 |
| 3 | 135 | 143 | 591 |
| 4 | 180 | 150 | 570 |

The filled tofu under each of Conditions 1 to 4 had a protein concentration (% by mass) being a value obtained by multiplying the protein concentration of the soymilk by 100/102.

For comparison, the mass of proteins (shown on the back of the product) is shown in the table below for 100 g of commercially available filled tofu from three manufacturers. The mass of proteins shown on each product is calculated using a nitrogen-protein conversion factor 5.71. The table below thus also shows the mass of proteins calculated using a nitrogen-protein conversion factor 6.25 as reference values.

**Table 6**

| | PRODUCT FROM COMPANY A | PRODUCT FROM COMPANY B | PRODUCT FROM COMPANY C |
|---|---|---|---|
| FILLED TOFU (CONVERSION FACTOR 5.71) | 5.4g | 5.1g | 5.9g |
| (REFERENCE) FILLED TOFU (CONVERSION FACTOR 6.25) | 5.9g | 5.6g | 6.5g |

### Experiment 3

### 3.1. Producing Soymilk

Soymilk was prepared from ingredient soybeans with the procedure described in Experiment 1, except that the step of pulverizing with water was performed under the conditions below.

In the step of pulverizing with water, 2000 g of the first mixture of 100 parts by weight of dehulled soybeans and 734 parts by weight of water was ground with the grinder described in Experiment 1 for 180 seconds. The first mixture was prepared with water at room temperature (about 20 °C). The temperature of the first mixture was not controlled during the grinding.

### 3.2. Producing Firm Tofu

To 100 parts by weight of the soymilk obtained in 3.1. Producing Soymilk above, 0.3 parts by weight of gypsum powder (calcium sulfate) or 0.8 parts by weight of emulsified nigari (containing 40% by mass of magnesium chloride) were added and mixed as a coagulant. Heating was performed at 90 °C for 20 minutes to obtain coagulated products. Each of the coagulated products was broken into broken tofu. The broken tofu was placed in a mold and compressed in the mold to produce firm tofu (cotton tofu). The firm tofu was then boiled and sterilized at 90 °C for 60 minutes to be sterilized firm tofu. The firmness of the sterilized firm tofu obtained as described above using gypsum powder or emulsified nigari as a coagulant was measured with the procedure described in Experiment 1.

### 3.3. Results

The table below shows the results. With either gypsum powder or emulsified nigari as a coagulant, the obtained firm tofu had favorable firmness greater than or equal to 400 gf. In particular, the firm tofu produced using gypsum powder as a coagulant had firmness of 621 gf.

**Table 7**

| COAGULANT | FIRMNESS OF FIRM TOFU (gf) |
|---|---|
| GYPSUM POWDER | 621 |
| EMULSIFIED NIGARI | 478 |

### Experiment 4

### 4.1. Producing Soymilk

### 4.1.1. Producing Soymilk with Method Including Soaking Soybeans in Water (Soaking Method)

### (1) Soaking Step

Seven thousand grams of ingredient soybeans (whole soybeans) were soaked in water for 17 hours. Soaking was performed using water at 15 °C with temperature control.

### (2) Grinding, Heating, and Separating Step

Excess water that was not absorbed by soybeans was removed. Soaked soybeans of the weights shown in the table below were collected. Water of the weights shown in the table below was added to the soaked soybeans (the amounts of the added water were calculated so that the total amount of water, including the water absorbed and the added water, would be 477 parts by weight with respect to 100 parts by weight of ingredient soybeans). Grinding was performed using a small-sized soymilk producing machine (Mini-star manufactured by Mase Tofu Machine Company Limited). The resultant slurry was heated with steam and separated into soymilk and solid soy pulp.

### 4.1.2. Producing Soymilk with Method without Soaking Soybeans in Water (Soak-Free Method)

The dehulling step and the step of pulverizing with water were performed under the conditions below. The heating step and the separating step were performed with the same procedure as in the method for producing soymilk with the soaking method to prepare soymilk.

### (1) Dehulling Step

Ingredient soybeans (whole soybeans) were roughly cracked and dehulled using a mill (Miruton machine) manufactured by Yamamoto Ironworks Cooperation as a cracking apparatus. The cracked and dehulled soybeans (dehulled soybeans) were collected. Dehulled soybeans of the weights shown in the table below were obtained from 7000 g of the ingredient soybeans.

### (2) Step of Pulverizing with Water

The entire amount of dehulled soybeans and 34100 g of water (487 parts by weight of water for 100 parts by weight of ingredient soybeans, 520 or 515 parts by weight of water for 100 parts by weight of dehulled soybeans) were mixed to prepare first mixtures. Each of the first mixtures was ground using a Vitamix Professional Series 750 manufactured by Vitamix. Water at room temperature (about 20 °C) was used in the preparing. The temperature of the first mixture was not controlled during the grinding.

### (3) Heating Step and Separating Step

The first mixture ground in the step of pulverizing with water was processed in the same procedure as in the heating step and the separating step in preparing soymilk with the soaking method described in 4.1.1 Preparing Soymilk above.

### 4.1.3. Soybeans and Mixture Used

Two varieties of soybeans were used as the ingredient soybeans. The variety 1 includes the soybeans harvested in 2021 and the soybeans harvested in 2022.

The table below shows Conditions 11 to 16 in producing soymilk.

**Table 8**

| CONDITION | SOAK/ SOAK-FREE | INGREDIENT SOYBEANS | INGREDIENT SOYBEANS | SOAKED SOYBEANS | DEHULLED SOYBEANS | WATER |
|---|---|---|---|---|---|---|
| 11 | SOAK | VARIETY 1 IN 2021 | 7000g | 15470g | - | 24937g |
| 12 | SOAK | VARIETY 1 IN 2022 | 7000g | 14980g | - | 25427g |
| 13 | SOAK | VARIETY 2 | 7000g | 15820g | - | 24587g |
| 14 | SOAK-FREE | VARIETY 1 IN 2021 | 7000g | - | 6555g | 34100g |
| 15 | SOAK-FREE | VARIETY 1 IN 2022 | 7000g | - | 6615g | 34100g |
| 16 | SOAK-FREE | VARIETY 2 | 7000g | - | 6615g | 34100g |

### 4.2. Producing Firm Tofu

The soymilk produced under each of Conditions 11 to 16 was diluted with water and adjusted to have a protein concentration of 5.0% by mass. The method for measuring the protein concentration is as described in Experiment 2. To 100 parts by weight of the soymilk after adjustment of protein concentration, 0.3 parts by weight of gypsum powder (calcium sulfate) were added and mixed as a coagulant. Heating was performed at 90 °C for 20 minutes to obtain coagulated products (soft tofu). Each of the coagulated products was broken into broken tofu. The broken tofu was placed in a mold and compressed in the mold to produce firm tofu (cotton tofu). The firm tofu was then vacuum-packed or the firm tofu was packed with water and sealed. After packing, boiling and sterilizing at 90 °C for 60 minutes were performed to obtain sterilized firm tofu. Hereafter, the firm tofu that is vacuum-packed and sterilized may be referred to as vacuum-packed tofu, and the firm tofu that is packed and sealed with water and sterilized may be referred to as water-packed tofu.

The firmness of the sterilized firm tofu was measured with the procedure described in Experiment 1.

The sterilized firm tofu was refrigerated at 4 °C for two months.

### 4.3. Method for Component Analysis

The procedure below was used to analyze the concentrations of α-glycerophosphocholine (α-GPC), fructose-6-phosphate (F6P), aspartic acid (Asp), and tyrosine (Tyr) in the soybeans (the variety 1 harvested in 2022 used in the soak-free method with Conditions 12 and 16), the soymilk, and the sterilized firm tofu immediately after production (stored for zero months) and after being refrigerated for two months.

The component analysis was performed with n = 3, and the mean and standard deviation were determined.

### (1) Preparing Specimen for Measurement

Soybeans: A specimen of 0.5 g of crushed soybeans was collected in a 15-ml test tube, and 9.5 ml of 0.1% formic acid in water was added.

Soymilk: A specimen of 1 g of soymilk was collected in a 15-ml test tube, and 9 ml of 0.1% formic acid in water was added.

Tofu: A specimen of 1 g of ground tofu was collected in a 15-ml test tube, and 9 ml of 0.1% formic acid in water was added.

Each test tube containing the specimen prepared above was stirred for 30 minutes in a shaker and centrifuged at 3000 rpm for 10 minutes. The supernatant (200 µl) was applied on an ultrafiltration filter (Nanosep centrifugal filtration device 3K, PALL) and centrifuged at 15000 rpm for 30 minutes. The resultant 100 µl of filtrate was mixed with additional 900 µl of 0.1% formic acid in water. The specimen passing through a 0.2-µm filter was placed in a vial (made of polypropylene) for measurement.

### (2) Preparing Specimen for Calibration Curve

D-fructose-6-phosphate disodium salt (NACALAI TESQUE), L-Aspartic acid (Wako), L-α-Glycerophosphocholine (Sigma), and L-Tyrosine (Wako Pure Chemical) were diluted in steps with 0.1% formic acid in water to prepare specimens for calibration curves.

### (3) LCMS Analysis Condition

LC: Ultimate 3000 (Thermo Fisher Scientific)
MS: Q Exactive Focus (Thermo Fisher Scientific)
Analysis column: Discovery HS F5, 5 µm, 250 × 4.6 mm, 5 µm (SIGMA-ALDRICH)
Column temperature: 40 °C, Injection volume: 2 µl, Flow rate: 0.3 ml/min
Mobile phase A: 0.1% formic acid in water (formic acid, FUJIFILM Wako Pure Chemical)
Mobile phase B: Acetonitrile (LCMS grade, FUJIFILM Wako Pure Chemical)
Mobile Phase Conditions:

**Table 9**

| | 0min | 15min | 35min | 40min | 58min | 61min | 70min | 70.1min | 78min |
|---|---|---|---|---|---|---|---|---|---|
| LIQUID A (v/v%) | 100 | 100 | 70 | 50 | 50 | 0 | 0 | 100 | 100 |
| LIQUID B (v/v%) | 0 | 0 | 30 | 50 | 50 | 100 | 100 | 0 | 0 |

MS conditions: Spray voltage 3.5 kV, Capillary temperature 250 °C, MS scan range m/z 67-1005, Ionization mode ESI positive, negative (switching)

### (4) LCMS Data Analysis

Extracted ion chromatograms of the m/z values corresponding to fructose-6-phosphate, aspartic acid, α-glycerophosphocholine, and tyrosine (shown in the table below) were extracted from the LCMS total ion chromatogram, and peak areas were calculated.

**Table 10**

| COMPOUND | m/z | RETENTION TIME |
|---|---|---|
| FRUCTOSE-6-PHOSPHATE | 259.0224 [M-H] | 9.5min |
| ASPARTIC ACID | 134.0447 [M+H] | 10.7min |
| *α*-GLYCEROPHOSPHOCHOLINE | 258.1098 [M+H] | 12.3min |
| TYROSINE | 182.0811 [M+H] | 36.4min |

Calibration curves were determined. The concentrations of fructose-6-phosphate, aspartic acid, α-glycerophosphocholine, and tyrosine in the measured specimen were determined. The concentrations (ppm) of respective components in the soymilk, tofu, or soybeans were calculated.

### 4.4. Component Analysis Results

### (1) α-Glycerophosphocholine

FIG. 1A shows the concentrations of α-glycerophosphocholine (α-GPC) in the soymilk produced with the soaking method (Condition 12) from ingredient soybeans of the variety 1 harvested in 2022 and in the soymilk produced with the soak-free method (Condition 15) from the same soybeans. The soymilk produced with the soak-free method (Condition 15) had a higher α-GPC concentration than the soymilk produced with the soaking method (Condition 12).

FIG. 1B shows the concentrations of α-GPC in the vacuum-packed tofu produced with the soaking method (Conditions 11, 12, and 13) or the soak-free method (Conditions 14, 15, and 16) from ingredient soybeans of the variety 1 harvested in 2021 (Conditions 11 and 14), the variety 1 harvested in 2022 (Condition 12 and 15), or the variety 2 (Conditions 13 and 16) measured immediately after production (stored for zero months). The vacuum-packed tofu produced with the soak-free method had a higher α-GPC concentration than the vacuum-packed tofu produced with the soaking method independently of the varieties and the harvest year of the ingredient soybeans.

FIG. 1C shows the concentrations of α-GPC in the vacuum-packed tofu and water-packed tofu produced with the soaking method (Condition 12) and in the vacuum-packed tofu and water-packed tofu produced with the soak-free method (Condition 15) measured immediately after production (stored for zero months) and after being stored for two months. The results revealed the trend of the tofu produced with the soak-free method (Condition 15) having a higher α-GPC concentration than the tofu produced with the soaking method (Condition 12) independently of the manner in which the tofu was packed (vacuum-packed or water-packed) and whether the tofu was stored for two months.

### (2) Fructose-6-phosphate

FIG. 2A shows the concentrations of fructose-6-phosphate (F6P) in the soymilk produced with the soaking method (Condition 12) from the variety 1 harvested in 2022 as ingredient soybeans and in the soymilk produced with the soak-free method (Condition 15) from the same soybeans. The soymilk produced with the soak-free method (Condition 15) had a lower F6P concentration than the soymilk produced with the soaking method (Condition 12).

FIG. 2B shows the concentrations of F6P in the vacuum-packed tofu produced with the soaking method (Conditions 11, 12, and 13) or the soak-free method (Conditions 14, 15, and 16) from the variety 1 harvested in 2021 (Conditions 11 and 14), the variety 1 harvested in 2022 (Conditions 12 and 15), or the variety 2 (Conditions 13 and 16) as ingredient soybeans measured immediately after production (stored for zero months). The vacuum-packed tofu produced with the soak-free method had a lower F6P concentration than the vacuum-packed tofu produced with the soaking method independently of the varieties and the harvest year of the ingredient soybeans.

FIG. 2C shows the concentrations of F6P in the vacuum-packed tofu and water-packed tofu produced with the soaking method (Condition 12) and the vacuum-packed tofu and water-packed tofu produced with the soak-free method (Condition 15) measured immediately after production (stored for zero months) and after being stored for two months. The results revealed the trend of the tofu produced with the soak-free method (Condition 15) having a lower F6P concentration than the tofu produced with the soaking method (Condition 12) independently of the manner in which the tofu was packed (vacuum-packed or water-packed) and whether the tofu was stored for two months.

### (3) Aspartic Acid

FIG. 3A shows the concentrations of aspartic acid (Asp) in the soymilk produced with the soaking method (Condition 12) from the variety 1 harvested in 2022 as ingredient soybeans and in the soymilk produced with the soak-free method (Condition 15) from the same soybeans. The soymilk produced with the soak-free method (Condition 15) had a higher Asp concentration than the soymilk produced with the soaking method (Condition 12).

FIG. 3B shows the concentrations of Asp in the vacuum-packed tofu produced with the soaking method (Conditions 11, 12, and 13) or the soak-free method (Conditions 14, 15, and 16) from the variety 1 harvested in 2021 (Conditions 11 and 14), the variety 1 harvested in 2022 (Conditions 12 and 15), or the variety 2 (Conditions 13 and 16) as ingredient soybeans measured immediately after production (stored for zero months). The vacuum-packed tofu produced with the soak-free method had a higher Asp concentration than the vacuum-packed tofu produced with the soaking method independently of the varieties and the harvest year of the ingredient soybeans.

FIG. 3C shows the concentrations of Asp in the vacuum-packed tofu and water-packed tofu produced with the soaking method (Condition 12) and in the vacuum-packed tofu and water-packed tofu produced with the soak-free method (Condition 15) measured immediately after production (stored for zero months) and after being stored for two months. The results revealed the trend of the tofu produced with the soak-free method (Condition 15) having a higher Asp concentration than the tofu produced with the soaking method (Condition 12) independently of the manner in which the tofu was packed (vacuum-packed or water-packed) and whether the tofu was stored for two months.

### (4) Tyrosine

FIG. 4A shows the concentrations of tyrosine (Tyr) in the soy milk produced with the soaking method (Condition 12) from the variety 1 harvested in 2022 as ingredient soybeans and in the soymilk produced with the soak-free method (Condition 15) from the same soybeans. The soymilk produced with the soak-free method (Condition 15) had a lower Tyr concentration than the soymilk produced with the soaking method (Condition 12).

FIG. 4B shows the concentrations of Tyr in the vacuum-packed tofu produced with the soaking method (Conditions 11, 12, and 13) or the soak-free method (Conditions 14, 15, and 16) from the variety 1 harvested in 2021 (Conditions 11 and 14), the variety 1 harvested in 2022 (Conditions 12 and 15), or the variety 2 (Conditions 13 and 16) as ingredient soybeans measured immediately after production (stored for zero months). The vacuum-packed tofu produced with the soak-free method had a lower Tyr concentration than the vacuum-packed tofu produced with the soaking method independently of the varieties and the harvest year of the ingredient soybeans.

FIG. 4C shows the concentrations of Tyr in the vacuum-packed tofu and water-packed tofu produced with the soaking method (Condition 12) and in the vacuum-packed tofu and water-packed tofu produced with the soak-free method (Condition 15) measured immediately after production (stored for zero months) and after being stored for two months. The results revealed the trend of the tofu produced with the soak-free method (Condition 15) having a lower Tyr concentration than the tofu produced with the soaking method (Condition 12) independently of the manner in which the tofu was packed (vacuum-packed or water-packed) and whether the tofu was stored for two months.

### (5) Concentrations of α-Glycerophosphocholine, Fructose-6-phosphate, Aspartic Acid, and Tyrosine in Soybeans

FIG. 5 shows the concentrations of α-glycerophosphocholine (α-GPC), fructose-6-phosphate (F6P), aspartic acid (Asp), and tyrosine (Tyr) in soybeans (the variety 1 harvested in 2022).

The results shown in FIG. 5 revealed that, in soybeans, the α-GPC concentration was higher than the F6P concentration and the Asp concentration was higher than the Tyr concentration.

### (6) α-GPC/F6P Ratio

As described in (1) to (4) above, the soymilk and tofu produced with the soak-free method have higher α-GPC and lower F6P concentrations and higher Asp and lower Tyr concentrations compared with the soymilk and tofu produced with the soaking method. As described in (5) above, in the soybeans, the α-GPC concentration is higher than the F6P concentration, and the Asp concentration is higher than the Tyr concentration.

For comparison, α-GPC/F6P and Asp/Tyr were calculated as indices for the concentration ratios of α-GPC to F6P and Asp to Tyr in soybeans, soymilk, and tofu with different water and protein contents. A value of α-GPC/F6P is obtained by dividing the α-GPC concentration value by the F6P concentration value. A value of Asp/Tyr is obtained by dividing the Asp concentration value by the Tyr concentration value.

FIG. 6A shows the values of α-GPC/F6P for the soybeans (the variety 1 harvested in 2022) and the soymilk produced from the same soybeans with the soaking method (Condition 12) and the soak-free method (Condition 15), calculated based on the concentrations of α-GPC and F6P shown in FIGs. 1A, 2A, and 5.

FIG. 6B shows the values of α-GPC/F6P immediately after production (stored for zero months) for the vacuum-packed tofu produced with the soaking method or the soak-free method from the variety 1 harvested in 2021, the variety 1 harvested in 2022, or the variety 2 as ingredient soybeans, calculated based on the concentrations of α-GPC and F6P shown in FIGs. 1B and 2B.

FIG. 6C shows the values of α-GPC/F6P immediately after production (stored for zero months) and after being stored for two months for the vacuum-packed tofu and water-packed tofu produced with the soaking method (Condition 12) and the vacuum-packed tofu and water-packed tofu produced with the soak-free method (Condition 15), calculated based on the concentrations of α-GPC and F6P shown in FIGs. 1C and 2C.

FIG. 7A shows the values of Asp/Tyr for the soybeans (the variety 1 harvested in 2022) and the soymilk produced from the same soybeans with the soaking method (Condition 12) and the soak-free method (Condition 15), calculated based on the concentrations of Asp and Tyr shown in FIGs. 3A, 4A, and 5.

FIG. 7B shows the values of Asp/Tyr immediately after production (stored for zero months) for the vacuum-packed tofu produced with the soaking method or the soak-free method from the variety 1 harvested in 2021, the variety 1 harvested in 2022, or the variety 2 as ingredient soybeans, calculated based on the concentrations of Asp and Tyr shown in FIGs. 3B and 4B.

FIG. 7C shows the values of Asp/Tyr immediately after production (stored for zero months) and after being stored for two months for the vacuum-packed tofu and water-packed tofu produced with the soaking method (Condition 12) and the vacuum-packed tofu and water-packed tofu produced with the soak-free method (Condition 15) from the same soybeans, calculated based on the concentrations of Asp and Tyr shown in FIGs. 3C and 4C.

The table below shows the values (mean values with n = 3 and standard deviation, or SD) of α-GPC/F6P shown in FIGs. 6A to 6C and the values (mean values with n = 3 and SD) of Asp/Tyr shown in FIGs. 7A to 7C. The soymilk and tofu produced with the soak-free method and the soybeans all had α-GPC/F6P greater than or equal to 0.40 and Asp/Tyr greater than or equal to 1.60. In contrast, the soymilk and tofu produced with the soaking method all had α-GPC/F6P less than 0.40 and Asp/Tyr less than 1.60.

**Table 11**

| TYPE | CONDITION | SOAK/ SOAK-FREE | *α*-GPC /F6P MEAN VALUE | SD | FIG. | Asp /Tyr MEAN VALUE | SD | FIG. |
|---|---|---|---|---|---|---|---|---|
| SOYBEANS | - | - | 4.984 | 0.475 | 6A | 16. 994 | 0.402 | 7A |
| SOYMILK | 12 | SOAK | 0.149 | 0.002 | 6A | 1.392 | 0.033 | 7A |
| SOYMILK | 15 | SOAK-FREE | 1.434 | 0.043 | 6A | 9.894 | 0.253 | 7A |
| TOFU VACUUM-PACKED STORED FOR 0 MONTHS | 11 | SOAK | 0.094 | 0.006 | 6B | 0.732 | 0.017 | 7B |
| TOFU VACUUM-PACKED STORED FOR 0 MONTHS | 14 | SOAK-FREE | 1.733 | 0. 136 | 6B | 4.452 | 0.341 | 7B |
| TOFU VACUUM-PACKED STORED FOR 0 MONTHS | 12 | SOAK | 0.199 | 0.011 | 6B | 1.327 | 0.052 | 7B |
| | | | | | 6C | | | 7C |
| TOFU VACUUM-PACKED STORED FOR 0 MONTHS | 15 | SOAK-FREE | 1.633 | 0.077 | 6B | 8.348 | 0.643 | 7B |
| | | | | | 6C | | | 7C |
| TOFU VACUUM-PACKED STORED FOR 2 MONTHS | 12 | SOAK | 0.319 | 0.030 | 6C | 1.460 | 0.142 | 7C |
| TOFU VACUUM-PACKED STORED FOR 2 MONTHS | 15 | SOAK-FREE | 3.269 | 0.990 | 6C | 9.237 | 1.943 | 7C |
| TOFU VACUUM-PACKED STORED FOR 0 MONTHS | 13 | SOAK | 0.083 | 0.001 | 6B | 1.018 | 0.044 | 7B |
| TOFU VACUUM-PACKED STORED FOR 0 MONTHS | 16 | SOAK-FREE | 2.127 | 0.023 | 6B | 4. 867 | 0.124 | 7B |
| TOFU WATER-PACKED STORED FOR 0 MONTHS | 12 | SOAK | 0. 218 | 0.008 | 6C | 1. 135 | 0.064 | 7C |
| TOFU WATER-PACKED STORED FOR 0 MONTHS | 15 | SOAK-FREE | 1. 793 | 0. 139 | 6C | 7.961 | 0.100 | 7C |
| TOFU WATER-PACKED STORED FOR 2 MONTHS | 12 | SOAK | 0.270 | 0.065 | 6C | 1.273 | 0. 133 | 7C |
| TOFU WATER-PACKED STORED FOR 2 MONTHS | 15 | SOAK-FREE | 2.441 | 0. 567 | 6C | 9.131 | 1.290 | 7C |

### 4.5. Measurement Results of Tofu Firmness

The measured firmness value of the vacuum-packed tofu (α-GPC/F6P = 1.633 and Asp/Tyr = 8.348; refer to the table above) produced in 4.2 above from the soymilk produced with the soak-free method (Condition 15) described in 4.1 above was 672 gf immediately after production (stored for zero months).

## Claims

1. A method for producing tofu, the method comprising:
grinding a first mixture of soybeans and water until particles of the soybeans in the first mixture have a volume median diameter less than or equal to 250 µm in a particle size distribution measured by dynamic light scattering;
heating the ground first mixture;
separating the ground and heated first mixture into soymilk and solid soy pulp; and
preparing tofu by coagulating a second mixture of the soymilk and a coagulant.

2. The method according to claim 1, wherein
the coagulant contains calcium sulfate.

3. The method according to claim 1 or claim 2, wherein
the tofu has firmness to cause, when a 3-cm-cubic specimen of the tofu adjusted to 5 °C is compressed by a circular plunger with a diameter of 20 mm at a uniform speed of 60 mm/min, a force applied on the circular plunger at a time of disruption to be greater than or equal to 290 gf.

4. The method according to any one of claims 1 to 3, further comprising:
cracking soybeans,
wherein the first mixture is a mixture of the cracked soybeans and water.

5. The method according to any one of claims 1 to 4, wherein
the preparing the tofu includes
filling and sealing the second mixture in a first container, and
preparing the tofu by coagulating the second mixture in the first container.

6. The method according to claim 5, wherein
the preparing the tofu further includes performing sterilization.

7. The method according to any one of claims 1 to 4, further comprising:
after the preparing the tofu, filling and sealing the tofu in a second container.

8. The method according to claim 7, wherein
the filling and sealing the tofu in the second container further includes performing sterilization.

9. The method according to any one of claims 1 to 4, further comprising:
after the preparing the tofu, breaking the tofu into broken tofu; and
preparing firm tofu by compressing the broken tofu in a mold.

10. The method according to claim 9, further comprising:
after the preparing firm tofu, filling and sealing the firm tofu in a third container; and
performing sterilization.

11. The method according to claim 9 or claim 10, wherein
the firm tofu has firmness to cause, when a 3-cm-cubic specimen of the firm tofu adjusted to 5 °C is compressed by a circular plunger with a diameter of 20 mm at a uniform speed of 60 mm/min, a force applied on the circular plunger at a time of disruption to be greater than or equal to 400 gf.

12. A method for producing soymilk, comprising:
grinding a first mixture of soybeans and water until particles of the soybeans in the first mixture have a volume median diameter less than or equal to 250 µm in a particle size distribution measured by dynamic light scattering;
heating the ground first mixture; and
separating the ground and heated first mixture into soymilk and solid soy pulp.

13. The method according to claim 12, wherein
the soymilk has a protein concentration greater than or equal to 4.0% by mass.

14. Packaged tofu, comprising:
a container; and
tofu prepared by filling and sealing a mixture containing soymilk and a coagulant in the container and coagulating the mixture in the container, the tofu having firmness to cause, when a 3-cm-cubic specimen of the tofu adjusted to 5 °C is compressed by a circular plunger with a diameter of 20 mm at a uniform speed of 60 mm/min, a force applied on the circular plunger at a time of disruption to be greater than or equal to 290 gf, the tofu having a protein concentration less than or equal to 7.0% by mass.

15. The packaged tofu according to claim 14, wherein
the tofu contains calcium sulfate.

16. Packaged tofu, comprising:
a container; and
tofu filled and sealed in the container, the tofu having firmness to cause, when a 3-cm-cubic specimen of the tofu adjusted to 5 °C is compressed by a circular plunger with a diameter of 20 mm at a uniform speed of 60 mm/min, a force applied on the circular plunger at a time of disruption to be greater than or equal to 400 gf, the tofu having a protein concentration less than or equal to 15.0% by mass.

17. The packaged tofu according to claim 16, wherein
the tofu contains calcium sulfate.

18. Packaged tofu, comprising:
a container; and
tofu filled and sealed in the container,
wherein, in the tofu, a concentration of α-glycerophosphocholine by mass is greater than or equal to 0.40 times a concentration of fructose-6-phosphate by mass, and a concentration of aspartic acid by mass is greater than or equal to 1.60 times a concentration of tyrosine by mass, and
the tofu has firmness to cause, when a 3-cm-cubic specimen of the tofu adjusted to 5 °C is compressed by a circular plunger with a diameter of 20 mm at a uniform speed of 60 mm/min, a force applied on the circular plunger at a time of disruption to be greater than or equal to 290 gf.

19. The packaged tofu according to claim 18, wherein
the tofu has firmness to cause the force to be greater than or equal to 400 gf.

20. A method for identifying tofu or soymilk produced with a soybean-soak-free production method including no step of soaking soybeans in water for 60 minutes or longer to cause the soybeans to absorb the water, the method for identifying comprising:
measuring concentrations by mass of α-glycerophosphocholine, fructose-6-phosphate, aspartic acid, and tyrosine in tofu or soymilk as a test target; and
determining that the tofu or soymilk as the test target is tofu or soymilk produced with the soybean-soak-free production method when a concentration of α-glycerophosphocholine is greater than or equal to 0.40 times a concentration of fructose-6-phosphate and a concentration of aspartic acid is greater than or equal to 1.60 times a concentration of tyrosine.
